# DEMANDE DE BREVET EUROPEEN

(11) **EP 2 810 586 A1**
(43) Date de publication de la demande: **10.12.2014**
(21) Numéro de dépôt: 14171476.6
(22) Date de dépôt: 06.06.2014
(51) Int. Cl.: A47C 4/04, B62B 7/08

(54) **Bi-structure extensible pliable, poussette, chariot**

(30) Priorité: 07.06.2013 FR 1355292
(71) Demandeur: Herbault, Patrick, 92250 La Garenne Colombes (FR)
(72) Inventeur: Herbault, Patrick, 92250 La Garenne Colombes (FR)
(74) Mandataire: Lebkiri, Alexandre

(57) **Abrégé**

La bi-structure extensible pliable rectangulaire comprend :
• une structure maillée (10) pliable formant un support ;
• une structure de maintien (20) pliable comprise dans un plan parallèle à la structure maillée (10) et maintenant ladite structure maillée (10) dans toutes les positions de pliage (POS1, POS2) de la structure maillée,
ladite structure maillée (10) étant en appui sur la structure de maintien (20) au moyen d'une pluralité de points de support (37), le pliage de la structure maillée (10) et le pliage de la structure de maintien étant synchronisés et s'inscrivant à l'intérieur de la forme rectangulaire de la bi-structure.

## Description

### DOMAINE

L'invention concerne le domaine des structures portantes pliables permettant de supporter un poids, comme par exemple des poussettes, des landaus ou des chariots. L'invention concerne plus particulièrement les structures portantes pliables offrant un profil rectangulaire de pliage et permettant un support à même la structure pliable.

### ETAT DE L'ART

Dans le domaine des objets pliables en largeur, à titre d'exemple une poussette de type Mac Laren, il est classique d'intégrer des dispositifs souples qui se plient et se déplient en synchronisation avec le pliage/dépliage général de l'objet.

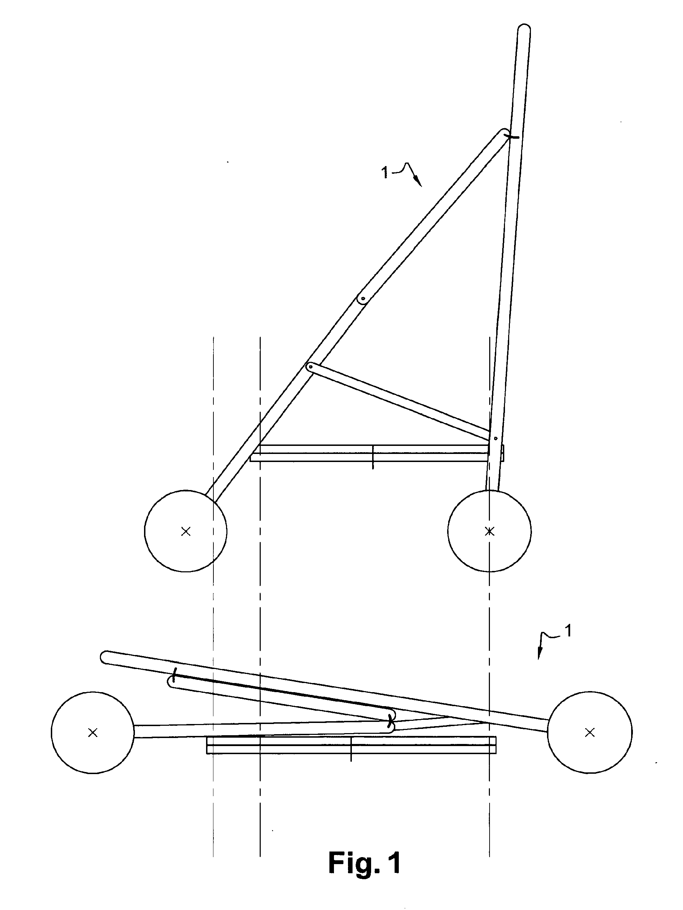

Une telle poussette 1 comprend une structure pliante la plus simplement représentée 1 à la figure 1 selon deux positions de pliage : une position dépliée et une position pliée.

Il s'agit de solutions de type « toile tendue » entre deux armatures ou de type « hamac » ou filet suspendu entre quatre points d'accrochage à la structure pliante.

Dans le cadre d'une poussette, c'est souvent le cas du hamac qui accueille le bébé. C'est aussi le cas de filets positionnés en partie basse qui permettent de ranger des accessoires. Certaines structures pliantes intégrant un hamac sont répandues dans la grande distribution pour transporter les éléments tels que des aliments de courses dans des magasins. Ces structures pliantes permettent de ranger les achats effectués dans le filet ou le hamac.

Un pliage obtenu en largeur aboutit le plus souvent à une structure pliante plus compacte que les solutions sans pliage en largeur.

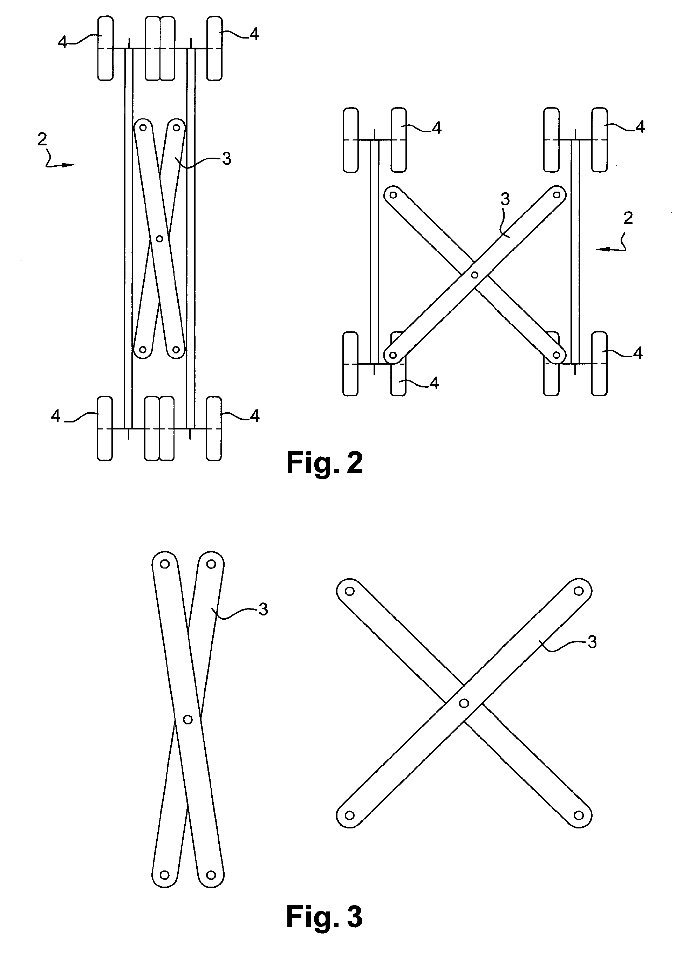

Cependant toutes ces solutions, lorsqu'elles offrent un pliage en largeur doivent respecter une capacité de pliage et dépliage et doivent comporter un dispositif si possible simple, telle que la croix 3 de la figure 3 intégrée à une structure pliante 2 comportant des roues 4 représentée à la figure 2, pour permettre à un filet ou un hamac de porter des éléments sans nuire à la structure pliante.

Dans le cas d'une poussette de type Mac Laren telle que représentée aux figures 1 et 2, la diminution en largeur est obtenue après avoir déverrouillé un double compas positionné à l'arrière de la poussette en poussant les bras arrière vers l'avant.

La réduction en largeur est obtenue au moment du pliage par la fermeture partielle d'un système en croix placé horizontalement.

Une contrainte généralement rencontrée de ces solutions est que :
- la structure pliante comportant un pliage en largeur est moins robuste qu'une solution sans pliage en largeur,
- l'usage de ces solutions est limité en raison des efforts s'exerçant sur la structure pliante ou sur la toile ou le hamac lorsque le poids est trop important.

Typiquement, un exemple est un pack de 6 bouteilles d'eau, ayant un poids d'environ 9 kg, qui sont difficilement portées sans déformation de la toile sous le siège d'une poussette.

### RESUME DE L'INVENTION

L'invention permet de résoudre les inconvénients précités.

Un objet de l'invention concerne une bi-structure extensible pliable rectangulaire comprenant :
- une structure maillée pliable formant un support ;
- une structure de maintien pliable comprise dans un plan parallèle à la structure maillée et maintenant ladite structure maillée dans au moins une position de dépliage de la structure maillée.

La structure maillée est en appui sur la structure de maintien au moyen d'une pluralité de points de support, le pliage de la structure maillée et le pliage de la structure de maintien étant synchronisés et s'inscrivant à l'intérieur de la forme rectangulaire de la bi-structure.

Avantageusement, les points de support comprennent au moins les deux coins du rectangle formé par la bi-structure. Les deux coins peuvent être munis d'interface de support.

Avantageusement, la structure de maintien permet au moins un verrouillage de la bi-structure dans la position de dépliage.

Avantageusement, la structure maillée comporte au moins une structure de cadre comportant au moins une barre de liaison.

Un avantage est que la structure de cadre permet d'offrir des points de support comprenant des interfaces venant offrir un point d'appui à la structure maillé, notamment sur différents points de la largeur de la bi-structure. La structure de cadre permet de rigidifier la bi-structure.

Avantageusement, au moins une barre de liaison est une barre coulissante ou une barre comprenant un manchon coulissant. Le manchon coulissant permet d'offrir au moins un point de support, notamment par la fixation d'une interface de support.

Avantageusement, au moins une barre de liaison comporte au moins deux éléments de liaisons, tel que des manchons, permettant d'assurer chacun au moins un point de support avec la structure maillée la barre de liaison s'étendant selon la longueur de la bi-structure.

Selon un mode de réalisation, la structure de cadre comporte au moins deux barres de liaison parallèles entre elles et formant la longueur de la bi-structure, chacune des barres de liaison étant fixée de part et d'autre de la structure maillée par au moins deux éléments de liaison, dont au moins un élément de liaison est solidaire de la barre de liaison auquel il est lié.

Selon un mode de réalisation, la structure maillée comporte au moins un élément extensible ayant une butée physique permettant de provoquer une mise en tension de l'élément extensible dans sa largeur en position de dépliage.

Un avantage est de permettre de coupler la bi-structure à un tissu par exemple offrant une assise plus confortable sur la bi-structure que la structure maillée. Un autre avantage de l'utilisation d'un tissu tendu légèrement tendu en tension est qu'il peut réaliser une fonction d'étanchéité.

Selon un mode de réalisation, le pliage est effectué selon la largeur de la bi-structure. Une première largeur en position de pliage est comprise dans un rapport d'au moins 1 à 4 d'une seconde largeur correspondant à une position de dépliage. Un avantage est que la bi-structure de l'invention permet d'obtenir des rapports plus largement de 1 à 16 selon les mises en oeuvre des différents modes de réalisations de l'invention.

Selon un mode de réalisation, le maillage de la structure maillée comporte un ensemble de barres ou de lames reliées entre elles par une pluralité de points d'assemblage.

Un avantage de la solution sous forme de barre est que des liaisons pivots peuvent être simplement mises en oeuvre. La cinématique de pliage est naturelle car toutes les liaisons tournent d'un même angle conjointement.

Un avantage d'un maillage à base de lames et que la liaison entre lame est transversale et offre une bonne tenue à un effort vertical. Un tel maillage permet également d'obtenir facilement différentes positions de pliage. Elle simple à combiner avec d'autres cinématiques par exemples celles d'une structure de maintien ou d'une structure cadre.

Selon un mode de réalisation, chaque point d'assemblage forme une liaison pivot entre deux barres du maillage.

Un avantage est que les points d'assemblage sont des points privilégiés pour former une base aux points de supports notamment lorsqu'une interface de la structure de maintien ou de la structure de cadre est en appui sur ces points.

Selon un mode de réalisation, les points d'assemblage permettent d'établir un contact plan localement entre deux portions de barres entre elles ou de lames entre elles.

Un avantage est de permettre un appui sur une interface formant un support simplifié car une extrémité de l'interface prévue à cet effet est en appui sur un plan.

Selon un mode de réalisation, le maillage de la structure maillée est sous forme d'une structure alvéolaire ayant une capacité d'extension en largeur.

Selon un mode de réalisation, au moins un élément de liaison forme une liaison glissière avec la barre de liaison auquel il est lié.

Selon un mode de réalisation, l'élément de liaison formant la liaison glissière est réalisé par :
- un profilé coulissant dans au moins une barre ;
- un trou oblong permettant un déplacement longitudinal d'un élément fixé à la structure maillée ;
- un élément amovible en rotation permettant un déplacement longitudinal d'un point de la structure maillée.

Selon un mode de réalisation, la structure de maintien comprend une structure de renfort transversale amovible dans sa longueur permettant d'assurer en position de dépliage un ensemble de points de supports transversaux.

Selon un mode de réalisation, la structure de renfort transversale comprend au moins un ensemble de barres coulissantes ou une barre télescopique.

Selon un mode de réalisation, la structure de renfort transversale comprend au moins un compas pliant, le pliage du compas étant synchronisé avec le pliage de la bi-structure.

Selon un mode de réalisation, au moins un compas pliant comporte deux bras reliés par une liaison pivot, dont un bras est prolongé de part et d'autre de la liaison pivot de sorte à permettre un appui plan entre les deux bras en position de dépliage.

Selon un mode de réalisation, au moins un compas pliant comporte un premier bras ayant un profilé en forme de « U » et un second bras ayant un profilé en forme rectangulaire de sorte qu'en position de pliage le profilé en forme rectangulaire est apte à s'insérer dans le profilé en forme de « U ».

Selon un mode de réalisation, la structure de maintien comprend au moins un dispositif de renfort de support pliable permettant de disposer d'au moins un point de support de la structure maillée à l'intérieur la forme rectangulaire de la bi-structure, le pliage du dispositif de renfort de support étant synchronisé avec le pliage de la bi-structure.

Selon un mode de réalisation, le dispositif de renfort de support comprend une croix centrale fixée sensiblement aux quatre coins de la structure de maintien permettant de disposer d'un point de support à la structure maillée en son centre.

Selon un mode de réalisation, le dispositif de renfort de support comprend au moins un antiparallélogramme, ledit antiparallélogramme étant fixé à la structure de renfort transversale au moyen de quatre liaisons pivots et permettant de disposer d'un point de support supplémentaire à la structure maillée.

Selon un mode de réalisation, la bi-structure comporte des positions intermédiaires de pliages, lesdites positions étant verrouillées aux moyens d'élément de verrouillage des positions intermédiaires.

Selon un mode de réalisation, la bi-structure est utilisée comme structure portante et comporte un dispositif vertical comportant des bras.

Selon un mode de réalisation, le dispositif vertical comporte un dispositif de rigidification permettant une réduction de la largeur séparant les bras lors du pliage de la bi-structure.

Selon un mode de réalisation, la bi-structure comporte des roues et des supports de roues reliés au quatre coin de la bi-structure.

Avantageusement, la bi-structure forme un support fixé par les coins de la forme rectangulaire.

Avantageusement, la bi-structure est fixée à l'intérieur d'un carter et qu'elle forme un support extractible de l'intérieur.

Avantageusement, la bi-structure forme le fond ou la paroi d'un contenant.

Avantageusement, la bi-structure peut être combinée à un dispositif enrouleur d'un revêtement de la bi-structure.

Un autre objet de l'invention concerne une poussette pliante comportant une bi-structure selon l'invention.

Un autre objet de l'invention concerne un landau pliant comportant une bi-structure selon l'invention.

Un autre objet de l'invention concerne un chariot pliant comportant une bi-structure selon l'invention.

Un autre objet de l'invention concerne une table pliante comportant une bi-structure selon l'invention.

Un autre objet de l'invention concerne un siège pliant comportant une bi-structure selon l'invention.

Un autre objet de l'invention une brouette pliante comportant une bi-structure selon l'invention.

Un autre objet de l'invention concerne une civière pliante comportant une bi-structure selon l'invention.

### BREVES DESCRIPTION DES FIGURES

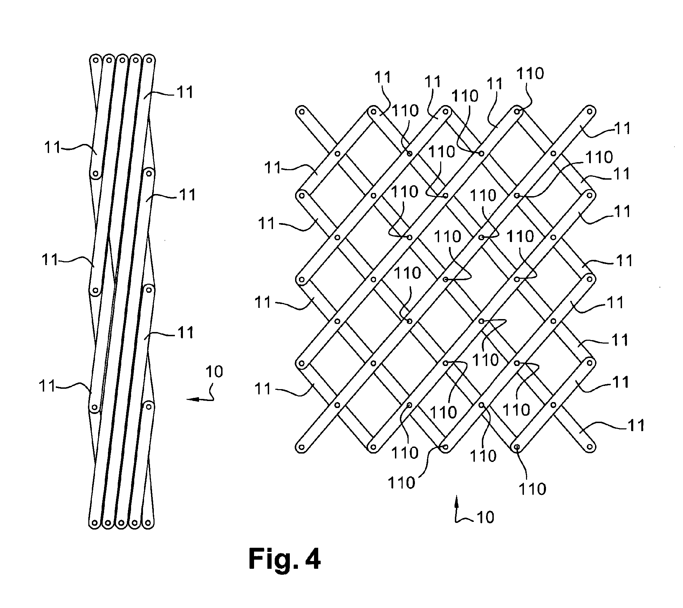

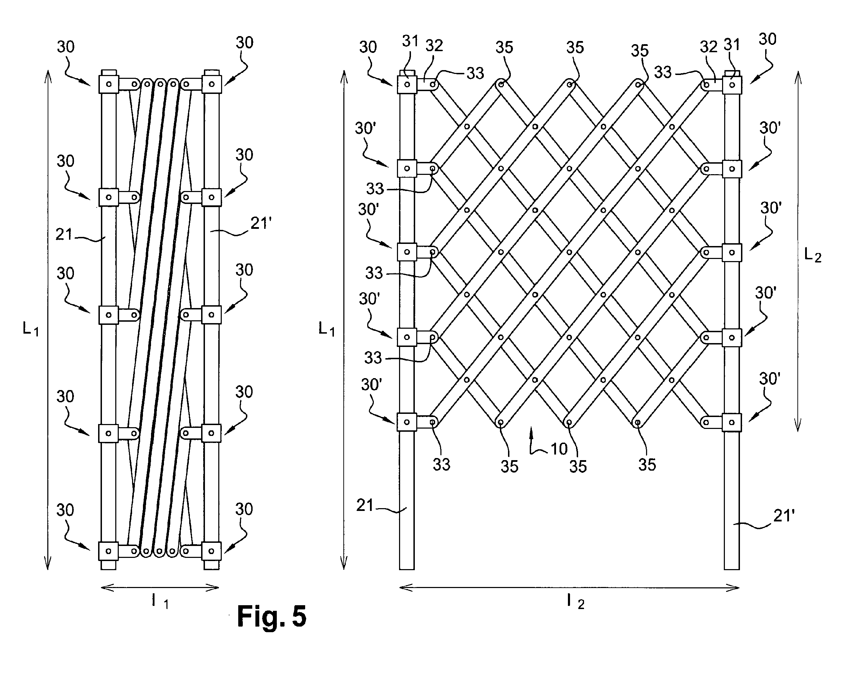

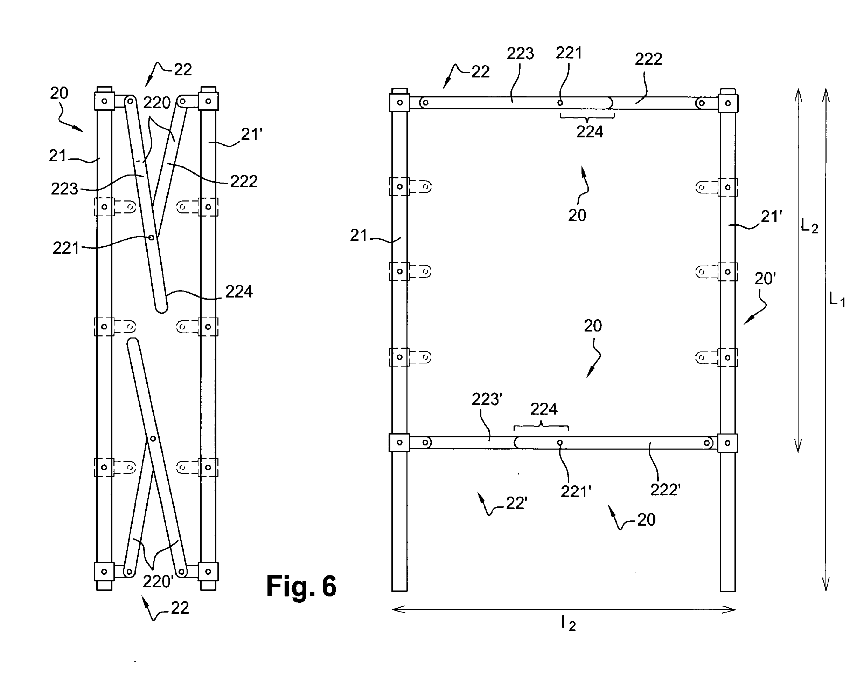

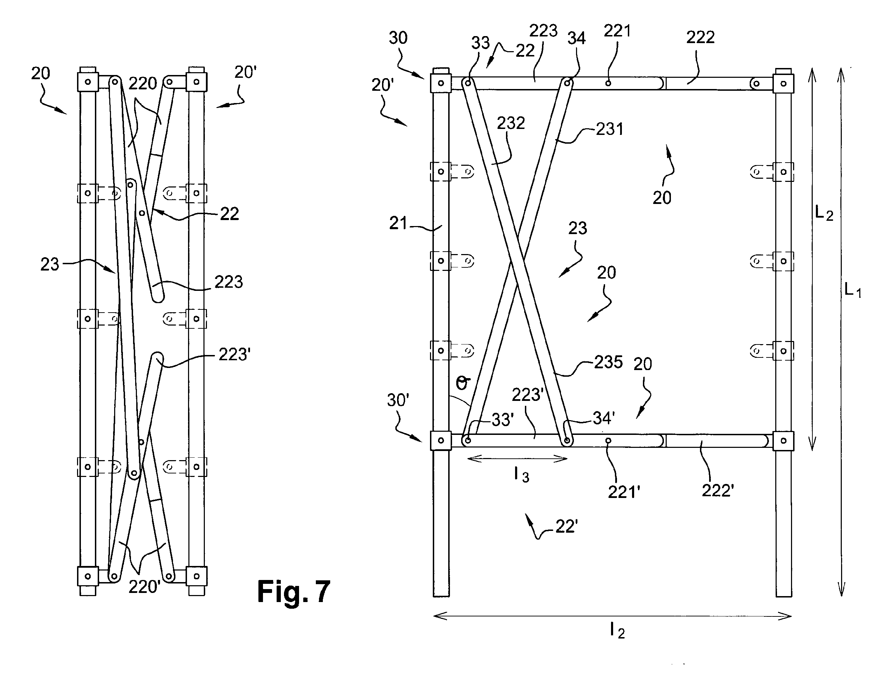

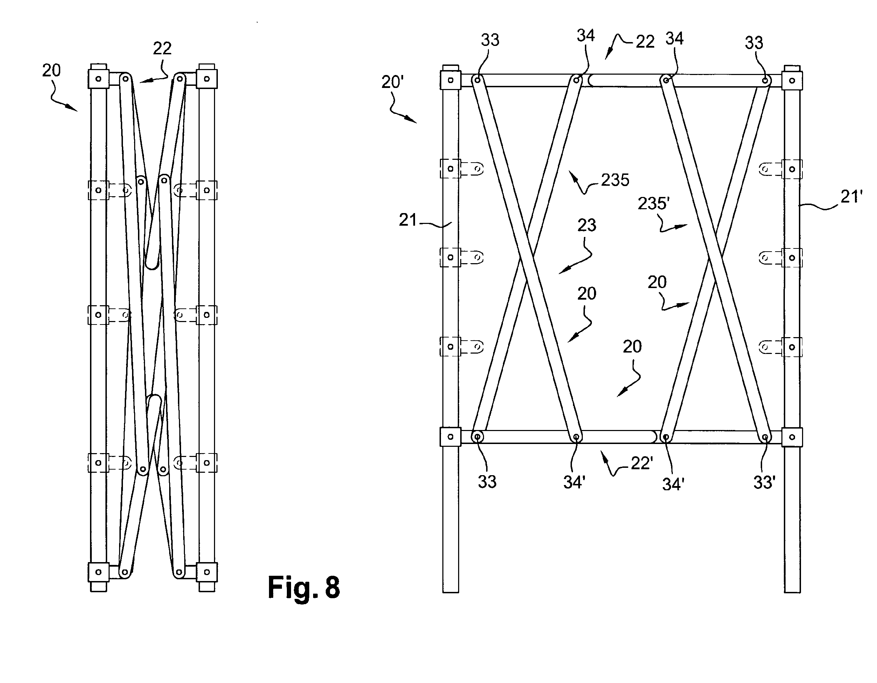

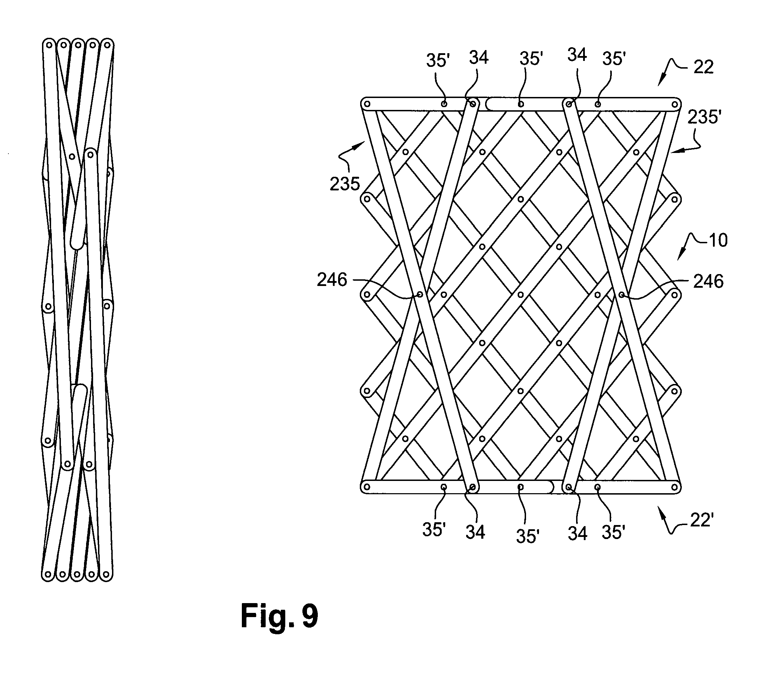

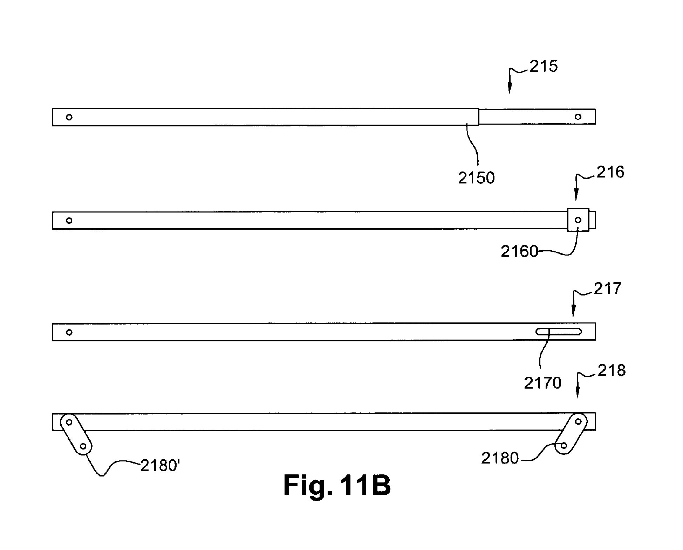

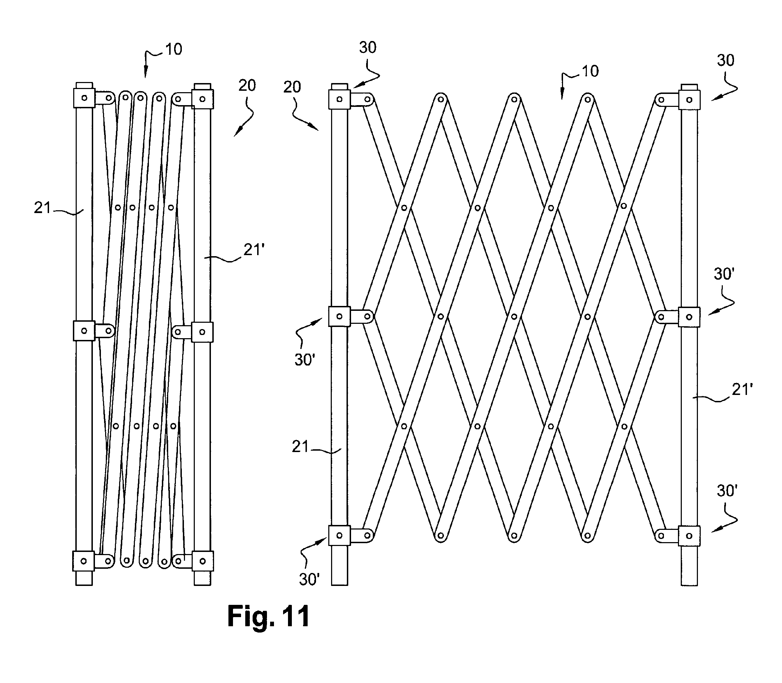

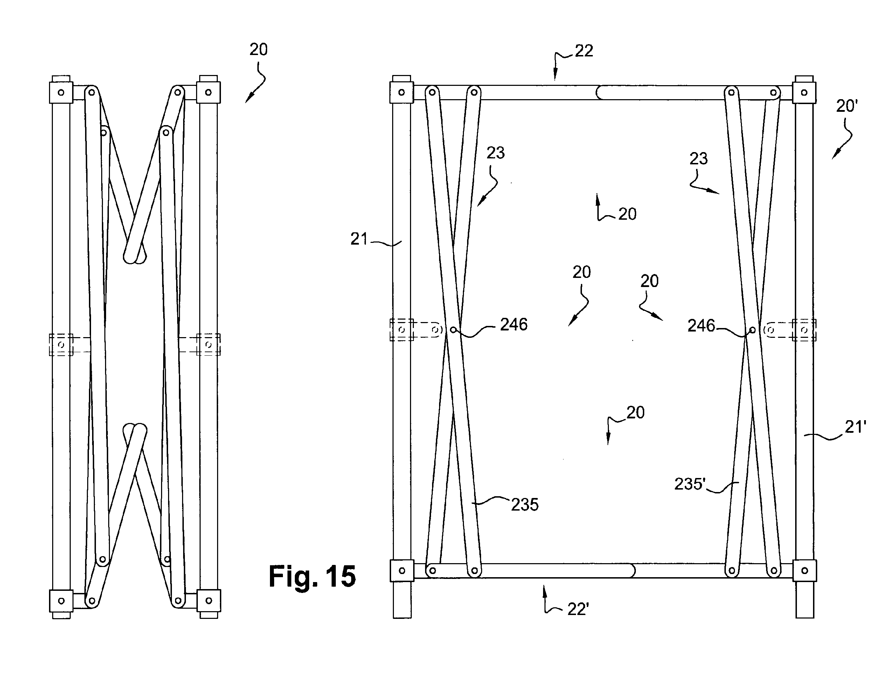

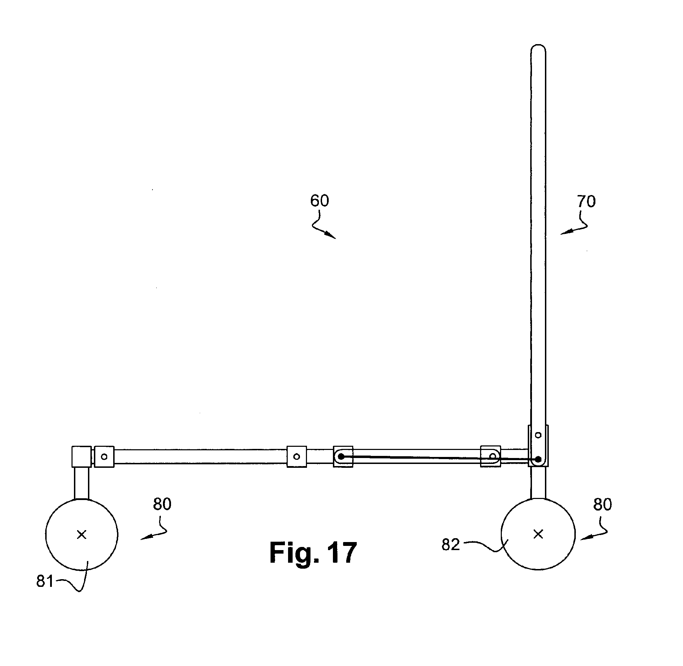

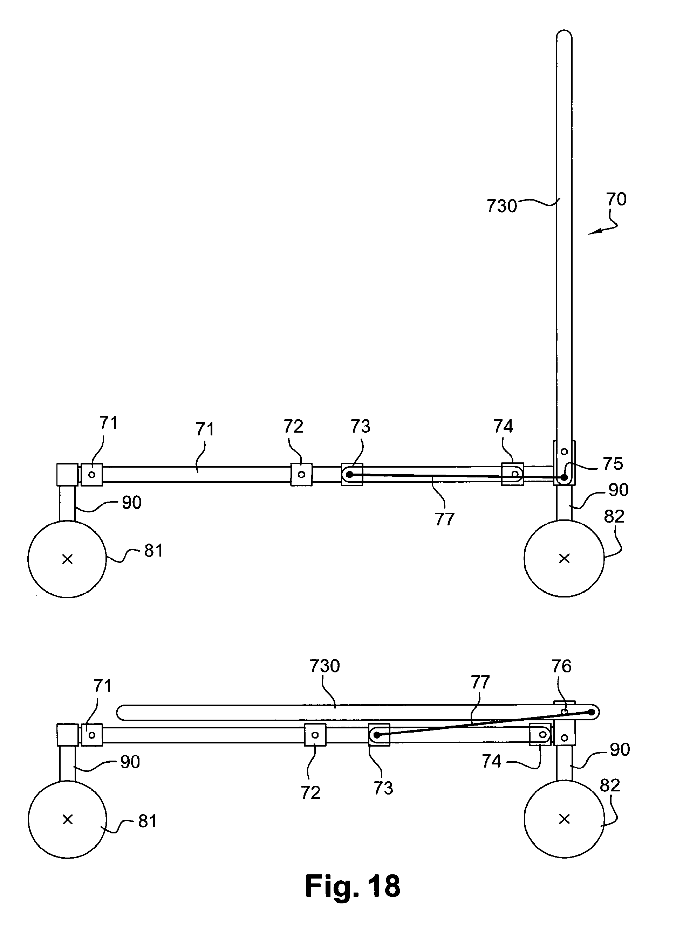

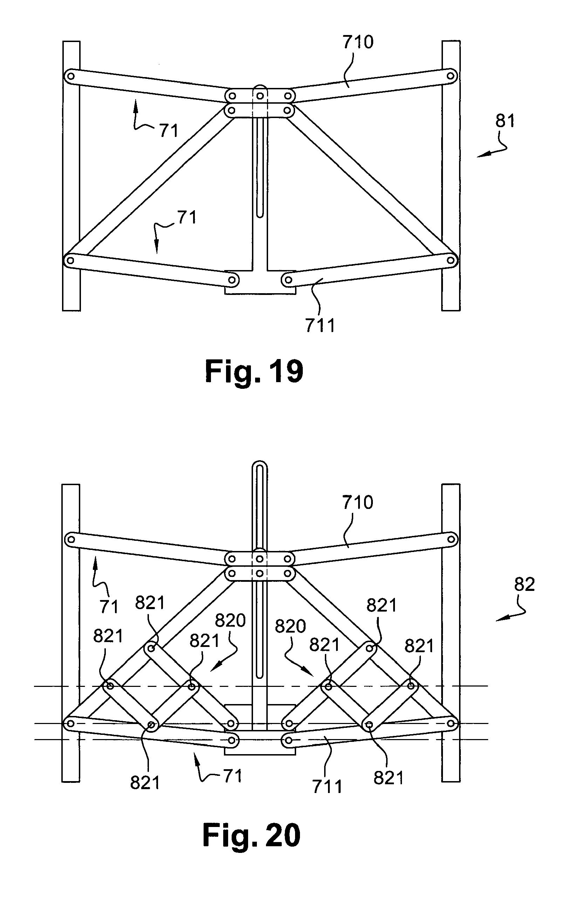

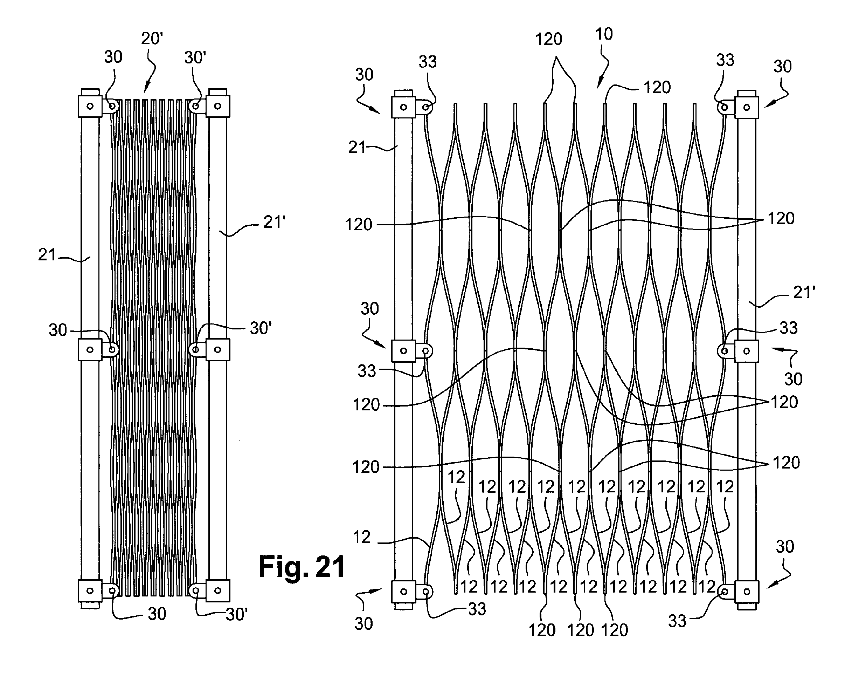

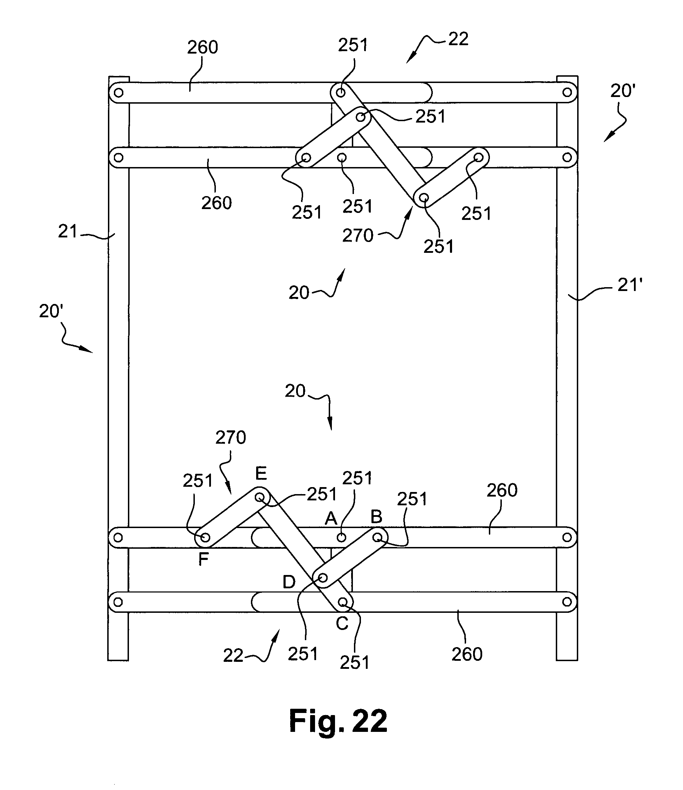

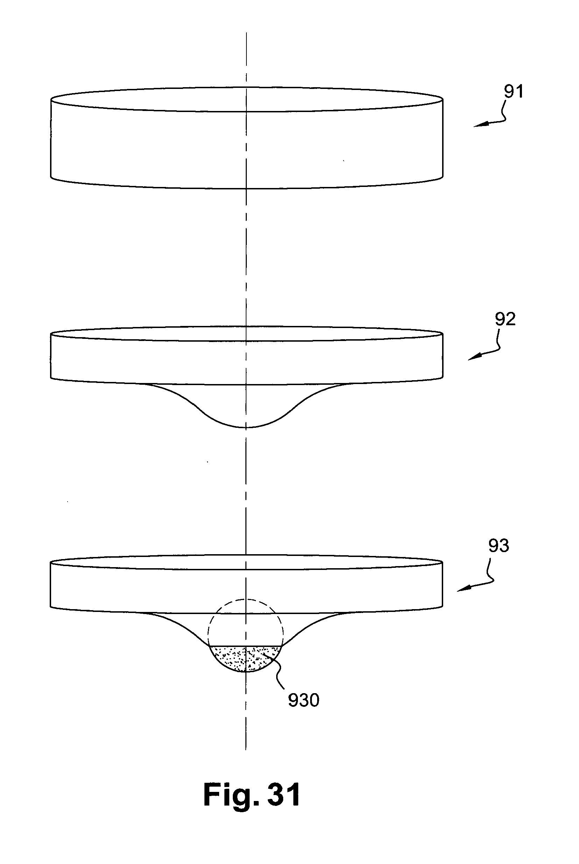

D'autres caractéristiques et avantages de l'invention ressortiront à la lecture de la description détaillée qui suit, en référence aux figures annexées, qui illustrent :
■ figure 1 : différentes vues d'une poussette pliable de l'art antérieur ;
■ figure 2 : différentes positions de pliages d'une poussette pliable de l'art antérieur ;
■ figure 3 : différentes positions de pliages d'une croix permettant un pliage d'une structure de l'art antérieur ;
■ figures 4, 9, 25 : différentes positions de pliages de différentes structures maillées de la bi-structure de l'invention ;
■ figures 5, 11 : différentes positions de pliages de différentes bi-structures de l'invention ;
■ figures 6, 12 à 16 : différentes positions de pliages de différentes structures de maintien de la bi-structure de l'invention;
■ figures 7, 8 : différentes positions de pliages d'une structure de maintien comprenant une ou plusieurs structure(s) de renfort transversale(s) l'invention ;
■ figure 9 : différentes positions de pliages d'un mode de réalisation d'une bi-structure de l'invention ;
■ figure 11B : différentes barres de liaisons comportant un élément permettant de former une liaison glissière ;
■ figures 17, 18 : différentes positions de pliages en vue de coupe d'un chariot de l'invention;
■ figures 19, 20, 26 à 30: différents dispositifs de rigidification d'un mode de réalisation d'une bi-structure de l'invention ;
■ figure 21 : une structure maillée comportant des lames d'une structure portante pliable de l'invention ;
■ figure 22, 23, 24 : une structure de maintien adaptée à une structure maillée à base de lames assurant un maintien en largeur d'une bi-structure de l'invention ;
■ figure 31 : des exemples d'interfaces permettant de former des points de support entre la structure maillée et la structure de maintien de l'invention.

### DESCRIPTION

On entend par « bi-structure rectangulaire » une bi-structure s'inscrivant dans une forme rectangulaire ou encore dont l'allure moyenne du périmètre forme un rectangle. La bi-structure rectangulaire peut évoluer lors du pliage selon différentes formes de rectangles dont la largeur et/ou la longueur peuvent varier. La bi-structure rectangulaire comprend les points quatre coins d'un rectangle.

On entend dans la suite de la description par « une structure antiparallélogramme », une structure formant effectivement un antiparallélogramme, c'est-à-dire un quadrilatère croisé dont les côtés non adjacents sont de même longueur formant à l'intérieur une croix pliable.

En outre, un antiparallélogramme comprend différentes propriétés dont : les angles opposés de la structure formant la croix ont la même mesure. Dans un antiparallélogramme, les diagonales sont parallèles et il admet un axe de symétrie qui est la médiatrice des diagonales. Il est également à noter qu'un antiparallélogramme est inscriptible dans un cercle et que deux côtés opposés ont leur point d'intersection situé sur cette médiatrice.

Une poussette Canne désigne une poussette comprenant un pliage en trois dimensions, lui permettant de se rétracter en longueur puis en largeur. Elle est aussi appelée "poussette parapluie".

On désigne par « croix Mac Laren », la croix pliable du nom de son inventeur composée de deux segments reliés par un pivot commun placé au milieu des deux segments et donc au centre de la croix utilisé dans une poussette Canne pour réaliser un pliage dans un plan a minima horizontal. Les pliages sont synchronisés par l'emploi d'une structure de propagation permettant sous l'action du pliage de la première croix horizontale, le pliage d'une seconde croix verticale ou d'un système de rigidification.

On désigne indifféremment une « structure de maillage » ou une « structure maillée » dans la suite de la description.

La bi-structure de l'invention comprend une structure rectangulaire pliable extensible. La forme rectangulaire est variable en largeur et longueur selon les position de pliage dans un rapport de l'ordre de 1 à 4 obtenu par la combinaison d'une première structure réalisant un maillage minimal, désignée par la suite comme la structure maillée, par rapport à l'application et d'une deuxième structure de maintien, dénommée structure de maintien.

Cette structure de maintien peut être conçue à base de barres de liaisons venant créer une multiplicité de point d'appuis supplémentaires en regard de la structure maillée.

La cinématique de la structure de maillage et la cinématique de la structure de support fonctionnent dans des plans parallèles.

La structure de maillage est réalisable sous la forme d'un ensemble de barres ou de lames reliées mécaniquement. Chaque barre ou lame est reliée à au moins une barre ou une lame voisine. Elle peut également prendre la forme d'une structure alvéolaire ayant une capacité d'extension en largeur analogue, voire très supérieure.

La structure de maintien est à base de barres de liaison fixes et/ou coulissantes :
- Elle est renforcée en particulier au niveau des articulations/pivots de façon à ce que en plus d'assurer la contribution à la cinématique dans le plan parallèle, elle soit capable de résister à une force perpendiculaire d'une à plusieurs dizaines de déca Newton en ne se déplaçant que de quelques millimètres.
- Elle est agencée de façon à ce qu'en position finale de dépliage, les points d'appuis de la structure de maintien viennent se positionner en regard des points de la structure de maillage avec un jeu faible, voire nul.

L'ensemble formé par la structure maillée et la structure de maintien réalise une bi-structure pliable inscriptible dans une forme géométrique rectangulaire extensible en largeur, appelé « structure extensible pliable ». Ladite bi-structure est intégrable dans une structure pliable existante ou est capable de contribuer à la cinématique globale d'un objet, ou de fonctionner de façon indépendante.

En particulier elle peut s'intégrer dans un système qui dispose déjà un système de pliage central, ou contribuer à la cinématique du système de pliage central soit encore devenir le coeur du système de pliage central.

Elles peuvent également être présentes dans différents plans d'un même objet pliable et synchronisées entre elles.

Des positions intermédiaires de pliage sont possibles selon des modes de réalisation de l'invention contrairement à des solutions à base de toile/tissu tendu, ce qui peut offrir une latitude de réglage en largeur en fonction de l'encombrement dimensionnel des objets. Par exemple, lorsque l'invention est appliquée à une poussette ou un landau, il est possible d'obtenir un réglage de la position de dépliage en fonction de la taille d'un bébé ou de la corpulence d'un adulte dans une autre application.

La figure 4 représente un mode de réalisation d'une structure maillée 10 de l'invention dans une position de pliage et une position de dépliage.

La structure maillée 10 comprend une pluralité de barres de liaisons 11 qui sont reliées les unes aux autres par des liaisons pivot 110. Toutes les liaisons pivot 110 ne sont pas représentées su la figure par commodité de lecture. La structure comprend dans toutes les positions de pliage ou dépliage deux ensembles de barres de liaisons, dans chaque ensemble les barres de liaisons sont parallèles entre elles.

Cette solution permet d'offrir une pluralité de points d'appuis en périphérie de la structure. Ces points d'appuis peuvent permettre d'y fixer des barres de maintien d'une structure de maintien. Notamment, elle offre plus de points d'appuis en périphérie qu'une croix classique telle que représentée à la figure 3. Les points d'appuis sont multipliés sur les côtés longitudinaux et les côtés transversaux de la structure maillée 10.

En outre, la surface formée par la structure maillée offre des points d'appuis supplémentaires au niveau de chaque liaison pivot 110.

La figure 5 représente un mode de réalisation dans lequel la structure maillée 10 est combinée à une structure cadre 20' comprenant deux barres 21, 21 '.

La structure cadre 20' peut être vue comme faisant partie de la structure de maintien 20 ou comme un cadre combiné à la structure maillée. La structure cadre 20' permet d'offrir comme la structure de maintien des points de support à la structure maillée.

Les structure de maintien 20, la structure cadre 20' et la structure maillée 10 sont toutes inscrites dans des plans parallèles qui peuvent être sensiblement identiques.

La structure cadre 20' comprend dans cet exemple deux barres 21, 21' parallèles de chaque côté et s'étendant en périphérie de la structure maillée 10 selon toute la longueur du rectangle ainsi formé en position de dépliage.

Les barres 21, 21' peuvent être choisies notamment selon les variantes décrites à la figure 11B.

Des éléments de liaisons 30, 30' permettent d'une part d'offrir une liaison 31 avec chaque barre 21, 21' et d'autre part un point d'appuis 33 avec la structure maillée. Les points d'appuis peuvent être réalisés par un ergot 32 orientée vers la structure maillée.

D'une manière plus générale, les points d'appuis 33 supplémentaires pour les côtés transversaux s'obtiennent en reliant les deux coins avant et arrière de chaque côté par des manchons coulissants sur un axe, ou par une barre télescopique coulissante.

La valeur d'extension est de l'ordre du rapport entre la diagonale et le côté soit au maximum de l'ordre de 30 à 40% ce qui est très accessible.

La figure 6 représente un mode de réalisation dans lequel la structure de maintien 20 comprend une structure de renfort transversale 22, 22'permettant de maintenir la structure en position de dépliage. En outre, la structure de renfort transversale 22, 22' permet d'accompagner les mouvements de pliage et dépliage.

On désigne ci-après la structure de renfort transversale 22, 22' par la numérotation simple 22 qui comprend de manière implicite tous les éléments de ladite structure. Lorsqu'il s'agit d'un mode de réalisation particulier, la différenciation entre l'élément 22 et l'élément 22' est précisée.

La structure de renfort transversale 22 comprend dans l'exemple de la figure 6 une première structure transversale avant 22 et une structure transversale arrière 22', chacune étant reliée respectivement aux deux extrémités avant des barres de liaisons 21 et 21' et aux deux extrémités arrière des barres de liaisons 21 et 21'.

La structure de renfort transversale 22 offre des appuis supplémentaires concernant les côtés transversaux, le long de la périphérie de la structure rectangulaire.

Un mode de réalisation peut être obtenu au moyen de barres télescopiques positionnées entre les deux coins avant droit et avant gauche de la structure rectangulaire.

Cependant, ce mode de réalisation permet d'obtenir des ratios de 1 à 2 aisément mais devient plus complexe à mettre en oeuvre pour obtenir des ratios entre les positions pliées et dépliées de l'ordre de 1 à 4 ou 1 à 5.

La figure 6 représente une alternative à la solution des barres télescopique qui elle n'est pas représentée.

Selon le mode de réalisation de la figure 6, la structure de renfort transversale 22 comprend au moins un premier compas 22 reliant les coins avant de la structure maillée. Elle peut comprendre un second compas dans un mode amélioré tel que le compas 22' disposé aux extrémités arrière de la structure maillée comme cela est représenté. Les compas forment une structure à barres de liaison pliante.

Le premier compas 22 avant comprend deux bras 223 et 222 pivotant autour d'une liaison pivot 22. Le second compas 22' arrière comprend deux bras 223' et 222' pivotant autour d'une liaison pivot 221.

Selon les modes de réalisation, la structure de renfort transversale comprend des barres de liaison fixes et/ou coulissantes.

Selon un mode amélioré, la structure de renfort transversale 22 peut être renforcée en particulier au niveau des articulations formant des liaisons pivots. Ce renfort permet, outre à assurer une contribution à la cinématique dans le plan parallèle, à la bi-structure de résister à une force perpendiculaire d'une à plusieurs dizaines de déca Newton en ne se déplaçant que de quelques millimètres.

Parmi les solutions de renfort correspondant à autant de mode de réalisation de l'invention, on trouve :
- Une mise en oeuvre d'un renfort au niveau de la liaison pivot elle-même, par exemple par un usinage adapté comprenant un faible jeu ;
- Une augmentation du diamètre de la liaison pivot sur une partie angulaire offrant une surface de contact plus importante ;
- Une augmentation du nombre de barres de liaison par exemple en doublant les barres de liaisons en les faisant fonctionner en parallèle typiquement de un à plusieurs centimètres de distance ;
- Une prolongation d'au moins une barre de liaison d'un compas de plusieurs centimètres au-delà d'un point pivot de façon à ce que ce prolongement puisse fournir ou trouver un appui sur une autre barre en regard ou sur une interface adaptée ;
- Une combinaison des solutions précédentes.

Selon la figure 6, la solution représentée est celle d'une prolongation d'une barre de liaison. Notamment, la partie prolongée 224 de la barre 223 s'étant au-delà du point de pivot 221.

Les zones de recouvrement 224 permettent de renforcer la tenue mécanique de la structure de renfort transversale 22 et offre un support plus robuste à la structure maillée 10.

Une solution pour augmenter la robustesse du demi-compas 223 est de réaliser un profilé en forme de « U » et prolongé en son extrémité par la partie 224. L'autre demi-compas 222 peut avoir un profil carré ou également en U venant s'insérer à l'intérieur du profil en forme de « U », l'ouverture du U étant horizontale dirigée vers l'extérieur.

Cette solution présente la caractéristique de pouvoir verrouiller le dispositif en position ouverte. Le déverrouillage peut être effectué de manière manuelle à chaque extrémité ou bien de façon automatique de façon synchronisée avec d'autres verrouillage/déverrouillage de la bi-structure.

Dans une variante de réalisation représentée à la figure 7, la structure de maintien 20 comprend :
- structure de renfort transversale 22 ;
- un dispositif de renfort de support 23.

Le dispositif de renfort de support 23 est indépendant d'un éventuel autre dispositif de verrouillage propre à la structure de renfort transversale 22. Dans le cas de la figure 7, le dispositif de renfort transversale 22 est un compas comportant une liaison pivot 221 autour duquel deux bras pivotent. Un demi-bras 222 comporte une barre de liaison coulissante de sorte à être compatible d'un pliage du dispositif de renfort de support 23.

Selon la figure 7, un dispositif de renfort de support 23 est agencé sur le côté gauche de la structure de maintien 20 tel que représenté sur la figure. Dans cette solution, de chaque côté de la structure de maintien 20, un antiparallélogramme 235 est fixé en deux points 33, 34 d'un demi-compas 223 à l'avant et en deux points 33' et 34' d'un demi-compas 223' à l'arrière.

L'antiparallélogramme 235 comporte deux barres 232 et 231 de longueur identique. Dans le mode de réalisation de la figure 7, les extrémités de l'antiparallélogramme 235 sont fixées sur chaque demi-compas 223 et 223' situés respectivement à l'avant et à l'arrière de la structure de maintien 20.

La longueur des barres est calculée pour que :
- En position fermée, l'antiparallélogramme 235 soit quasiment fermé mais pas tout à fait pour éviter son inversion.
- En position ouverte, les demi-compas soient alignés.

Les petits côtés l₃ de l'antiparallélogramme 235 sont en ordre de grandeur sensiblement égal à la longueur de la variation L1 -L2 séparant les deux structures de renfort transversales 22 et 22' dans les positions de pliage et de dépliage. L'égalité est vraie au cosinus près de l'angle θ. L'angle θ est formé entre une des barres 231 de l'antiparallélogramme 235 et la barre de liaison 21.

Les grands côtés de l'antiparallélogramme 235 sont en ordre de grandeur sensiblement égaux à l'hypoténuse du triangle formé en position ouverte par le petit côté l₃ et la longueur L2.

Dans cette variante, l'autre demi-compas 222 est réalisé par une liaison coulissante du fait de sa variation de longueur.

Selon un autre mode de réalisation, le demi-compas 222 peut être supprimé en prolongeant l'autre demi-compas 223 pour couvrir la largeur totale l₂ de la structure de maintien 20 sous réserve d'avoir en regard un dispositif d'accueil de type ergot qui vient entrer puis s'encastrer dans une fente, garantissant ainsi son maintien.

Il est possible d'utiliser également un antiparallélogramme par côté. La figure 8 représente le cas où un second antiparallélogramme 235' est agencé sur le côté droit de la structure de maintien 20, reliant également l'avant et l'arrière en quatre points désignés sur cette figure par les points 33, 34 à l'avant et les points 33' et 34' à l'arrière

La figure 9 représente un mode de réalisation dans lequel les barres de liaisons longitudinales 21, 21' peuvent être supprimées. En effet, les deux antiparallélogrammes 235 et 235' peuvent remplir la fonction des barres longitudinales. Les antiparallélogrammes 235 et 235' offrent au moins deux points de supports à la structure maillée 10 et contribue sur toute la longueur de chacune de ses barres à porter la structure maillée 10. Des interfaces, telles que celles représentées à la figure 31, peuvent être disposés sur les barres de l'antiparallélogramme 235 en prenant en compte :
- la distance entre le plan de la structure maillée 10 et la barre concernée par la pose d'une interface ;
- le chevauchement des barres pouvant interférer avec l'interface.

La bi-structure comprend alors une structure maillée 10 maintenue par une structure de maintien 20. La structure de maintien 20 comprend :
- une structure de renfort transversale 22, 22' comprenant chacune deux barres de liaison sans liaison entre elles, les barres de liaison pivotant chacune autour d'une liaison pivot située sur un coin à l'avant de la structure maillée 10 ;
- un dispositif de renfort de support 23 comprenant deux antiparallélogrammes 235, 235'

Le fait que la structure puisse se déplier/replier uniquement en étant tenue par les quatre coins est une caractéristique qui peut être avantageuse car moins encombrante structurellement et moins complexe à ajuster dans la synchronisation des différents pliages des éléments composant la bi-structure.

La cinématique des variantes décrites de la bi-structure est équivalente à la cinématique d'une croix de Mac Laren. Ceci est un avantage pour l'implanter la solution de l'invention dans un équipement destiné à être plié, telle qu'une poussette par exemple, en lieu et place d'une croix. La bi-structure offre un plateau robuste permettant de supporter des objets d'un poids important de plusieurs dizaines de kilos. Dans ce cas la bi-structure forme une bi-structure extensible portante et pliable de forme rectangulaire.

Il est possible de combiner une telle bi-structure avec une croix si elle est positionnée dans un plan parallèle à ladite croix.

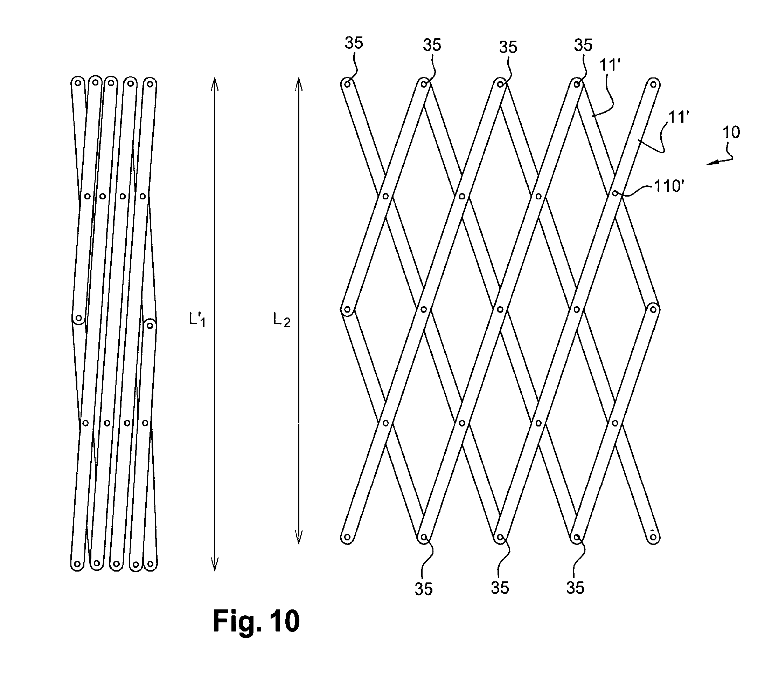

La figure 10 représente une structure maillée permettant d'offrir des surfaces dépliées rectangulaire plus allongées partant de la même longueur pliée que les modes précédents. Cette solution offre un meilleur rendement de gain en largeur lorsque la bi-structure est en position pliée. Ce mode de réalisation comporte moins de barres 11' et moins de liaisons pivot 110' que la solution de la figure 4. Cette structure offre moins de points de support 110' en surface et moins de points de support longitudinaux 33 et moins de points de support 35 transversaux que la solution des figures 4 et 5, mais offre un gain de rendement de proportion de pliage.

Par exemple dans le cas d'une poussette, cela permet de disposer d'un panier plus allongé et plus près du sol fixé à proximité des quatre roues.

La variation de longueur L1'- L3 au lieu des 20 à 30 % précédents avec L1' -L2 est de l'ordre de 7 %, soit par exemple 4 centimètres pour une longueur de 60 centimètres.

La longueur L1' est sensiblement proche de la longueur L1, cela dépend du dépassement souhaité des barres de la structure de cadre 21, 21'.

Cette solution peut être combinée à des barres de liaison 21, 21' comme représentées à la figure 11 et équivalentes de la solution de la figure 5. Les barres de liaisons 21, 21' sont maintenues à la structure maillée 10 au moyen d'éléments de liaison 30, 30'. Comme à la figure 5, des éléments de liaisons 30 sont fixes sur la barre de liaison 21, 21' et d'autres éléments de liaison 30' forme une liaison glissière avec la barre de liaison 21, 21' de sorte à autoriser le pliage de la bi-structure.

A noter qu'en regard du plus faible déplacement en longueur à absorber, soit 7% environ pour l'exemple précédent, des solutions de fixations par trous oblongs ou double articulation par de très courts éléments deviennent également envisageables.

La figure 11B représente différents exemples de barres permettant d'offrir la structure maillée un jeu longitudinal vis-à-vis de la structure de maintien 20 lors du pliage de la bi-structure. Selon les points de support utilisés qui permettent d'établir la liaison entre la structure maillée 10 et la structure de maintien 20, différents éléments peuvent être mise en oeuvre.

Une barre coulissante 215 comprenant deux tubes coulissants l'un dans l'autre au niveau d'un point de coulissement 2150.

Une barre 216 comprenant un manchon 2160 coulissant pouvant supporter un point de support pour fixer la structure maillée 10.

Une barre 217 comprenant une ouverture oblong 2170 permettant un jeu longitudinal d'une pièce solidaire de la structure maillée insérée et coulissante dans le trou.

Une barre 218 comprenant des éléments 2180, 2180' amovible en rotation autour d'un point de pivot de la barre 218.

Toute ces solutions permettent d'ajuster au cas par cas la différence de longueur entre la logeur L1 de la bi-structure et la longueur L1' de la structure maillée représentée à la figure 10.

Les modes de réalisations des figures 5 à 9 peuvent être adaptés au mode de réalisation de la figure 11.

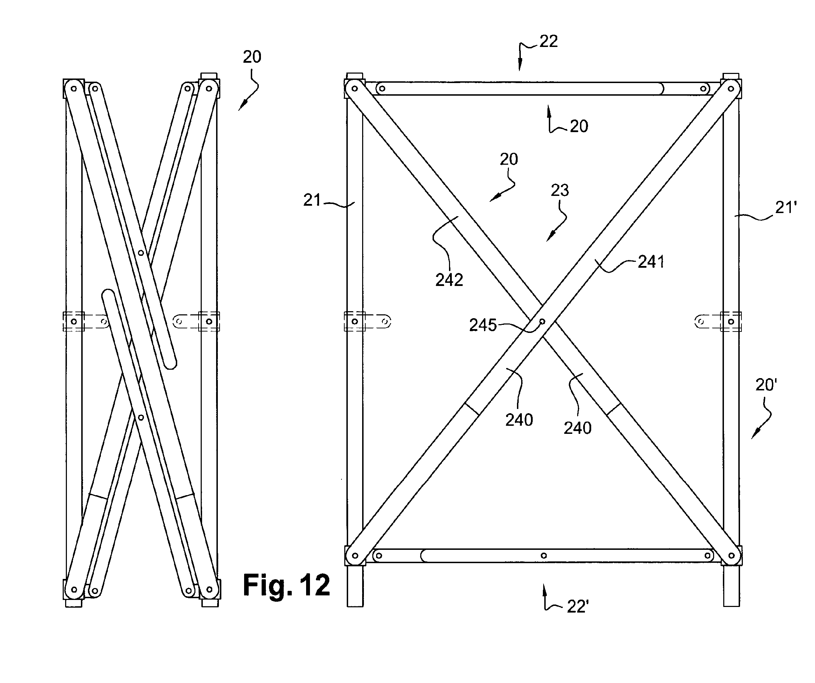

La figure 12 représente un mode de réalisation d'une structure de renfort de support ayant la forme d'une croix 240 en position de dépliage. Un système de barres coulissantes 240 comporte alors deux barres 241 et 242. Chacune des barres 241, 242 coulisse lors du pliage ou dépliage de la bi-structure.

Des interfaces, telles que celles représentées à la figure 31, peuvent être disposés sur les barres de la croix 240 en prenant en compte :
- la distance entre le plan de la structure maillée 10 et la barre concernée par la pose d'une interface ;
- le chevauchement des barres pouvant interférer avec l'interface.

Cette structure de renfort de support offre un point de support supplémentaire au centre de la croix, ce point étant simple dans la mise en oeuvre d'une solution d'une pose d'interface. En effet, ce point est indépendant du chevauchement des barres 241, 242 lors du pliage ou dépliage et il permet de proposer un point d'appui central 245 offrant une répartition symétrique des efforts de support.

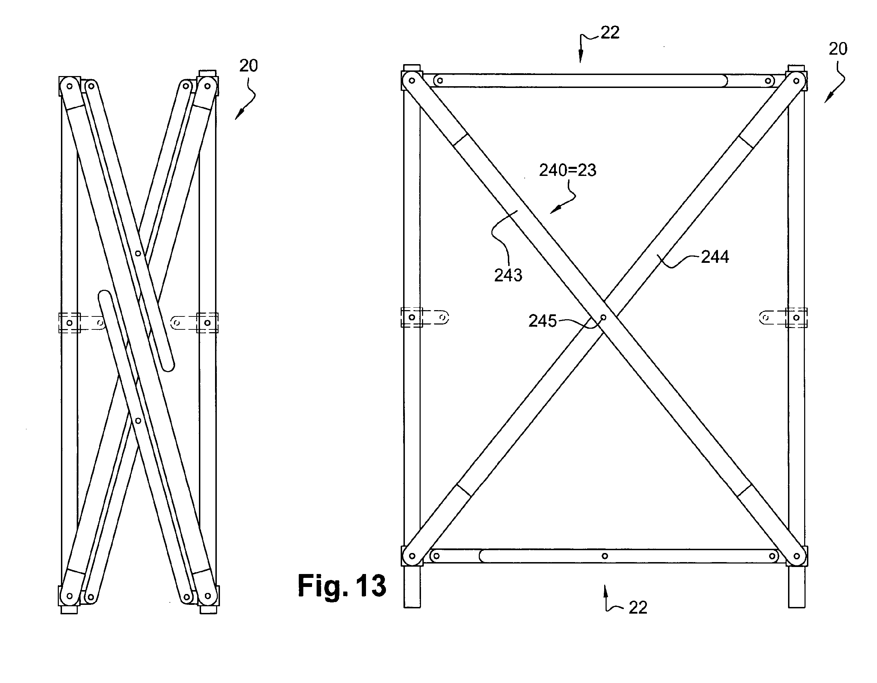

La figure 13 propose une alternative à la figure 12 dans laquelle deux barres coulissantes 243, 244 sont chacune doublement coulissante en chacune de leur extrémité. Dans ce mode de réalisation, il est possible de conserver une liaison pivot au croisement des deux diagonales 243, 244. Chaque barre correspond en position de dépliage à deux demi-diagonale coulissante.

Cette variante plus complexe dans sa mise en oeuvre apporte néanmoins les avantages suivants :
- La présence d'un point pivot central qui autorise une fixation positive avec le point de la structure maillée 10 positionnée en regard ;
- Un gain en hauteur possible en faisant se croiser localement par exemple des demi-hauteurs de barres coulissantes
- Une possibilité si besoin de galber localement au centre la croix.

La structure de maintien 20 est performante en tant que solution compacte en hauteur, la compacité en hauteur est maximale notamment lorsque le nombre de couches des différents éléments peuvent être inscrites dans un plan de faible épaisseur.

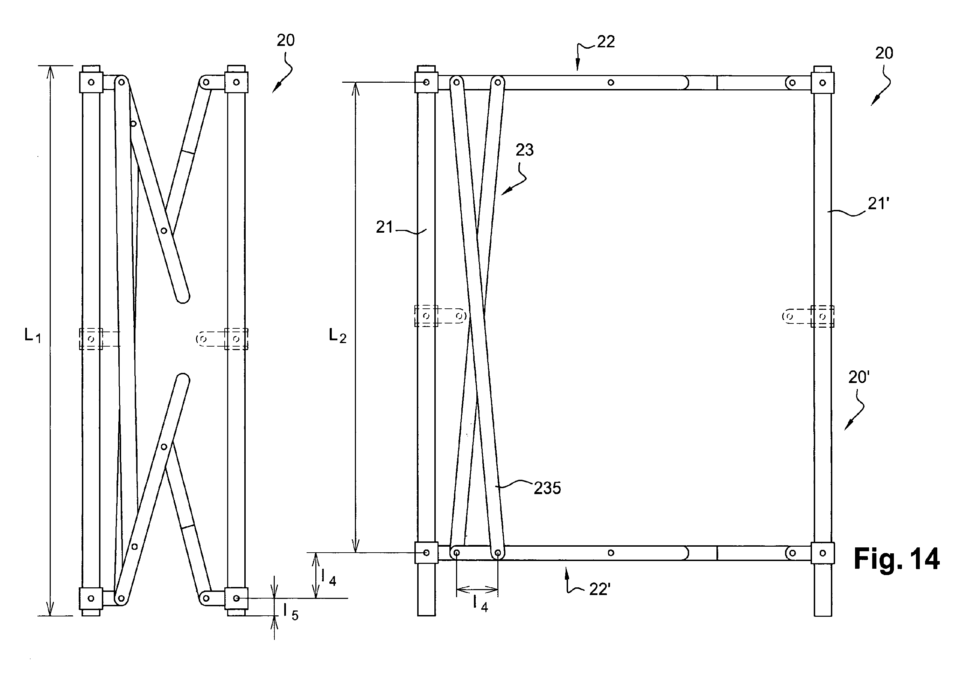

La figure 14 représente des variantes comprenant un dispositif de renfort de support 23 à antiparallélogrammes avec une largeur plus petite que les solutions à antiparallélogramme précédentes.

Dans la figure 14, la longueur des côtés des antiparallélogrammes est en ordre de grandeur la variation L₁ - l₄ de longueur de la bi-structure, à l'excès de longueur l₅ des barres de la structure cadre près. Dans cet exemple, la variation est sensiblement proche de 4 centimètres. Cet exemple permet de peu faire varier la longueur L₁ de la structure de maintien 20.

La figure 15 permet de représentée une structure de maintien 20 comprenant un dispositif de renfort de support 23 comprenant deux antiparallélogrammes 235, 235' situés de part et d'autre de la largeur de la structure de maintien 20 à l'intérieur du périmètre rectangulaire.

La figure 16 représente un mode de réalisation dans lequel le dispositif de renfort de support comprend une croix centrale coulissante combinée avec deux antiparallélogrammes.

Un mode d'assemblage d'une bi-structure, peut consister en :
- un premier choix d'un dimensionnement d'une structure de maintien 20 telle que décrite ;
- un second choix optionnel d'un dimensionnement d'une structure cadre 20' et ;
- un troisième choix adaptée d'une structure maillée compatible à quelques centimètres près.

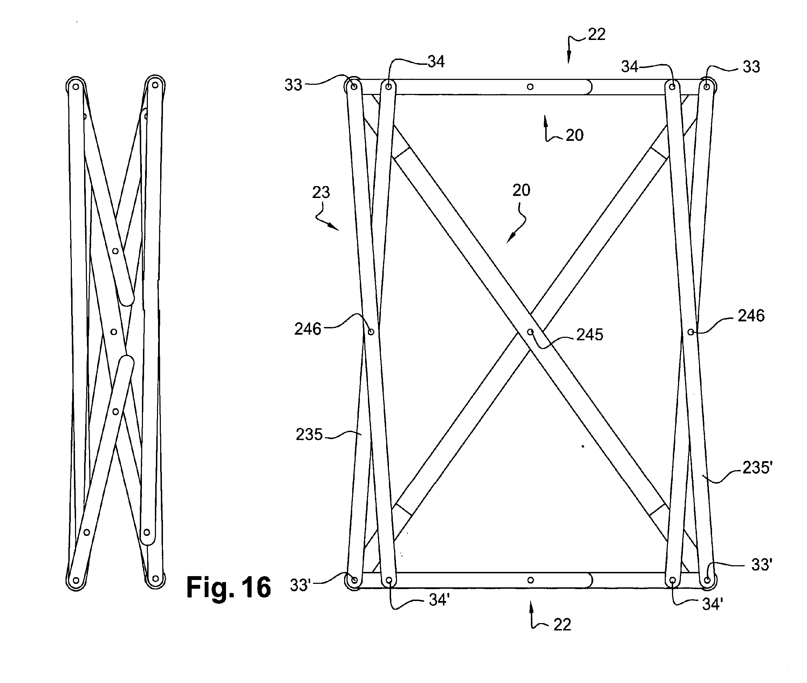

Notamment, dans la variante de réalisation, par exemple de la figure 16, le dimensionnement de la structure cadre 20' n'intervient pas car le pliage et le dépliage sont effectués uniquement en étant tenue par les quatre coins de la structure rectangulaire.

Sur cette base, il est possible de réaliser un ensemble autonome tel qu'un chariot 60 représenté à la figure 17 comportant des roues 80 dont des roues avant 81 et des roues arrière 82. Des supports de roues 90 sont représentés permettant de fixer les roues 80 à la bi-structure. La cinématique fonctionne de façon analogue à celle d'une poussette et bénéficie du gain en efficacité du ratio de variation en longueur/variation en largeur de la bi-structure de l'invention.

Le chariot comporte en outre des bras 70 permettant de manipuler le chariot dont la bi-structure réalise le plateau inférieur.

La figure 18 représente latéralement une position de pliage et une position de dépliage du chariot 70.

Un premier manchon 71 sur la gauche, situé à l'avant du chariot, est fixe et correspond au point d'accroche avant de la bi-structure.

Le second manchon 72 est coulissant sur une partie intermédiaire et coulisse d'une distance d'environ 2 centimètres.

Le troisième manchon 73 est coulissant fixé à une distance donné d'un quatrième manchon 74 qui est coulissant et va coulisser d'environ 4 centimètres.

Une biellette 77 fixée d'une part au troisième manchon 73 et d'autre part au prolongement du bras arrière 70, en son extrémité 75, à une distance d'environ 4 centimètres du point de rotation 76.

Les deux bras arrière 70 comportent dans ce cas un dispositif de rigidification 80 qui peut être un double compas et qui assure un verrouillage en largeur du chariot.

Dans ce mode de réalisation, le plateau inférieur peut être intégré dans un modèle de chariot plus complet :
- disposant d'un deuxième plateau supérieur ;
- disposant d'une corbeille en partie haute ;
- disposant d'une potence porte-cabas.

La figure 19 représente un mode de réalisation classique d'un dispositif de rigidification 81 agencé entre les deux bras 70 formé d'un double compas 71 comprenant un premier compas supérieur 710 et un second compas 711.

La figure 20 représente un mode de réalisation original d'un dispositif de rigidification 82 agencé entre les deux bras 70 formé d'un double compas 71 comprenant également un premier compas supérieur 710 et un second compas 711. Ce dispositif de rigidification 82 comporte en plus une structure losange 820 permettant de consolider le dispositif et d'offrir différents points de supports sur la bi-structure.

Dans l'exemple du chariot représenté à la figure 18 qui comporterait un dispositif de rigidification 81 ou 82, nous avons deux plans :
- un plan horizontal qui comporte la bi-structure de l'invention et ;
- un plan 730 qui tourne autour d'un axe de rotation 76 passant du plan horizontal à un plan vertical après dépliage.

Cela donne l'opportunité de nouveaux points de support, également appelés points de renforcement, pour la bi-structure horizontale, lesdits points supplémentaires étant placés à l'arrière de la bi-structure et situé à proximité de l'axe de rotation du plan 730.

Ces points de renforcement, en l'occurrence de soutien dans le plan vertical peuvent être issus d'une bi-structure analogue positionnée dans le plan en rotation. Ces points d'appuis pour être compatibles du pliage doivent être réalisées sous forme de charnières dont l'axe est le plus proche de l'axe de rotation 76, une moitié étant dans le plan horizontal, l'autre moitié étant dans le plan en rotation de l'autre structure, Ce principe est généralisable si l'objet pliable comporte plusieurs structures extensibles, à titre d'exemple une civière qui en plus d'être pliable en largeur se plie également à mi-longueur, ou une chaise pliante comportant une assise et un dossier, un fauteuil pliant en largeur associant un dossier ou encore une assise et un repose jambes.

Dans le cas précédent correspondant à celui de la figure 20, il est également possible de créer des points de renforcement en venant compléter le compas arrière de points intermédiaires 821 sous forme de structure losange 820 venant créer des points environ au quart, au milieu et au trois quart de la largeur.

La figure 20 représente une alternative d'une structure maillée 10 de l'invention.

Le maillage de la structure maillée 10 se présente sous forme de l'association de lames souples 12 reliées entre elles en des points de contacts 120. Tous les points de contacts 120 non pas été notés sur la figure 20 par commodité de lecture.

A titre d'exemple de réalisation, il s'agirait d'une vingtaine de lames souples d'environ 60 centimètres de longueur reliées les unes aux autres alternativement de chaque côté tous les 15 centimètres par des rivets pop.

Cette structure alvéolaire extensible formant la structure maillée peut également être réalisée sous forme de structure en nid d'abeille. Elle peut être également réalisée industriellement sous forme de plastique souple injecté ou sous forme de feuilles de plastique par exemple en polyamide ou polypropylène soudées les unes aux autres. Dans ce dernier cas, le ratio d'extension peut atteindre un ratio de 1 à16.

D'une part cette variante apporte un meilleur rendement puisque que l'écart de longueur de la bi-structure représente tout au plus un centimètre.

Si cette structure maillée extensible est fixée par les points centraux, les extrémités ne vont se déplacer que de quelques millimètres. Des solutions de type « poignées de valises » permettent de fixer des extrémités aux quatre coins de la bi-structure.

D'autre part un doigt d'enfant ou même d'adulte ne serait en danger s'il restait présent au moment de la fermeture. Cette solution comporte un avantage du point de vue de la sécurité assurée par le maillage.

De plus en raison de sa souplesse, cette solution autorise un léger galbe de quelques centimètres qui est à agencer sur la structure de maintien 20 soit en ajoutant des profils adéquats en interface soit en galbant les liaisons elles-mêmes. Ceci est pertinent dans certains cas liés à la physiologie pour un dossier, pour une assise, pour un support à langer un bébé, pour une civière.

Il est également possible de créer le galbe sur la face externe de la structure maillée 10, en particulier dans le cas d'une bi-structure alvéolaire, telle que décrite ou voisine de type nid d'abeille par une épaisseur variable réalisant en creux et/ou en relief le profil souhaité.

Il est également possible de combiner la possibilité de galber à la fois la structure de maintien 20 et la structure maillée 10 et éventuellement la structure de cadre 20'.

De sorte à assurer un maintien de la bi-structure dans la largeur, il est possible de munir la structure de maintien 20 d'une structure de renfort transversale 22.

Une solution mathématiquement exacte consiste à positionner aux deux extrémités des compas doubles fonctionnant en opposition.

La figure 22 représente un mode de réalisation d'une structure de maintien 20 permettant d'assurer un maintien en largeur d'une structure maillé à base de lames. Une structure de cadre 20' est fixée à la structure de maintien 20 au niveau d'une zone à proximité comprenant les coins de la forme rectangulaire de la bi-structure. Selon une interprétation, la structure de cadre 20' peut être considérée comme faisant partie de la structure de maintien 20.

Dans ce mode de réalisation, la structure de maintien 20 comporte un ensemble de liaisons pivot 251 et un double compas 22 à l'avant de la structure et à l'arrière. Les compas doubles 260 utilisent un « bisecteur » 270 issu du « trisecteur » d'Alfred Kempe à base de deux antiparallélogrammes dont l'un ACEF est le double de l'autre ABCD.

Dans ce mode de réalisation, les relations suivantes des points pivots sont vérifiées :
- AB=CD=1 ;
- AB=AC=EF=2;
- CE=4.

Le rôle du « bisecteur » 270 est de maintenir la totale symétrie des angles de rotation des demi-compas gauches et droits, ce qui induit le strict respect de la structure rectangulaire de la bi-structure.

Ce mode de réalisation exige peu d'espace, ce qui autorise le renforcement au centre par une à deux barres coulissantes en diagonale et/ou des compas supplémentaires.

Il est également possible d'obtenir une solution approximative toujours à base d'antiparallélogrammes.

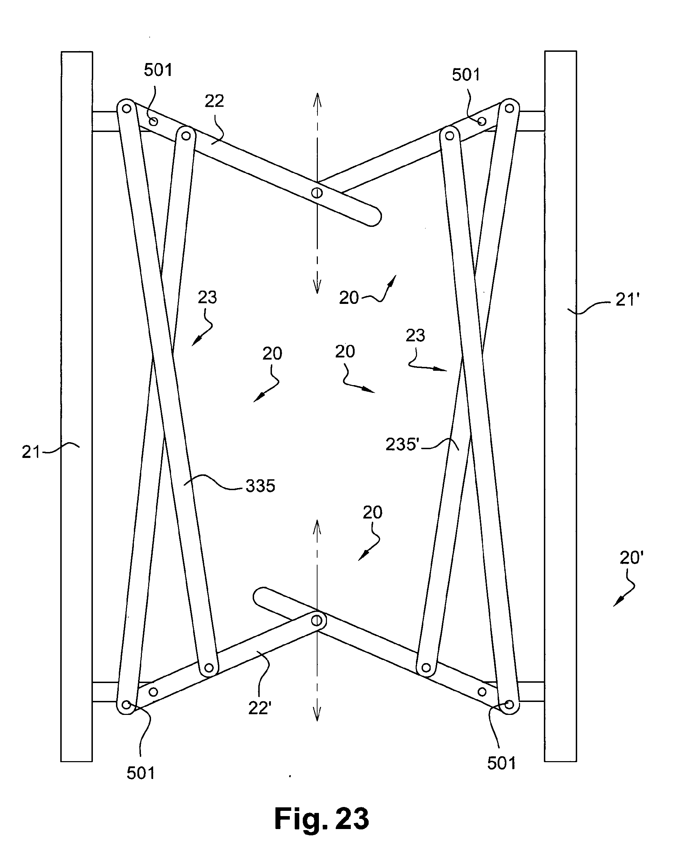

La figure 23 représente un autre mode de réalisation d'une structure de maintien 20 combiné avec une structure de cadre 20'.

Dans ce mode de réalisation, deux compas 22, 22' fonctionnent en opposition et sont synchronisés en rotation par les deux antiparallélogrammes 23, 23'. Les barres 21, 21' dont le parallélisme est à synchroniser sont liés par des points de rotations 501 milieux des petits côtés des antiparallélogrammes 23, 23'.

Dans la figure 23, il a été retenu une proportion de l'antiparallélogramme d'un rapport environ de 1 à 7 : cela permet d'avoir un écart d'1% entre les deux valeurs. L'hypoténuse d'un triangle rectangle de base 1 et de hauteur 1/7 a pour longueur la racine carrée de 1+1/49 = 1 + 2% égal à 1 + 1 % fois la base.

Selon un mode de réalisation la structure de maintien 20 peut comprendre des compas pliants intermédiaires non représentés dans un sens et/ou dans l'autre.

Cette solution permet d'ajouter un renfort selon un axe longitudinal selon le nombre de compas pliants ajoutés.

Un point de support central peut être également ajouté au moyen de une à deux barres coulissantes en diagonale.

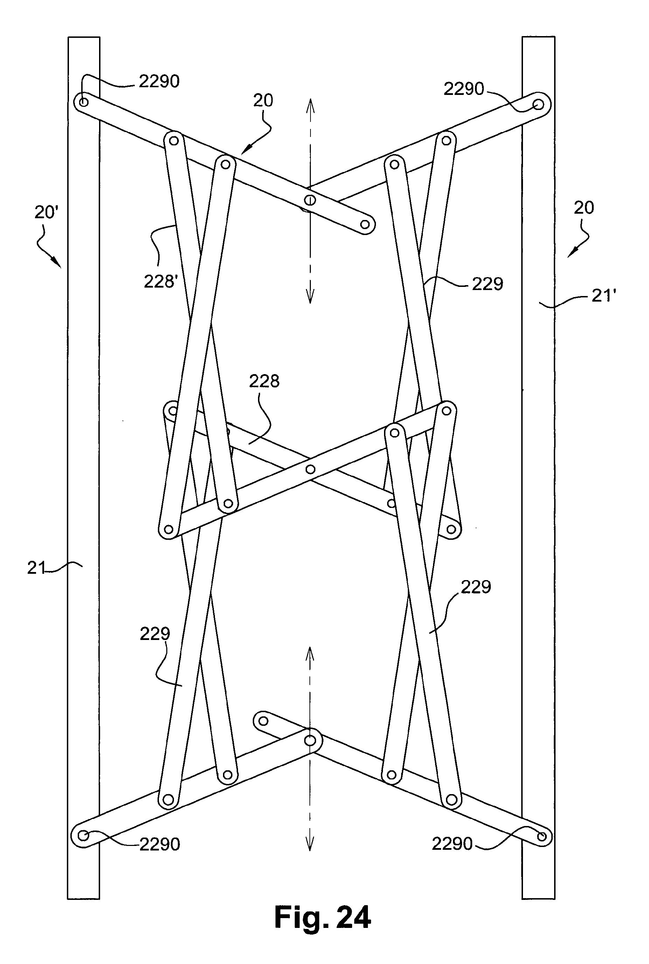

La figure 24 représente un autre mode de réalisation comprenant une structure de cadre 20' à laquelle est fixée un structure de maintien 20 par des liaisons pivots 2290. Ce mode de réalisation constitue une solution envisageable et compatible de la bi-structure. Elle comprend :
- une croix centrale dont les branches sont reliées par des antiparallélogrammes à l'échelle ½ des précédents ;

Cette solution permet :
- d'assurer au moyen de la croix un relais de la synchronisation de la rotation de la bi-structure;
- d'assurer la conservation d'un écartement de quelques centimètres entre les liaisons de pliages ;

Il est possible d'ajouter à la structure de maintien 20 : une à deux barres coulissantes en diagonale pour assurer l'appui du point central.

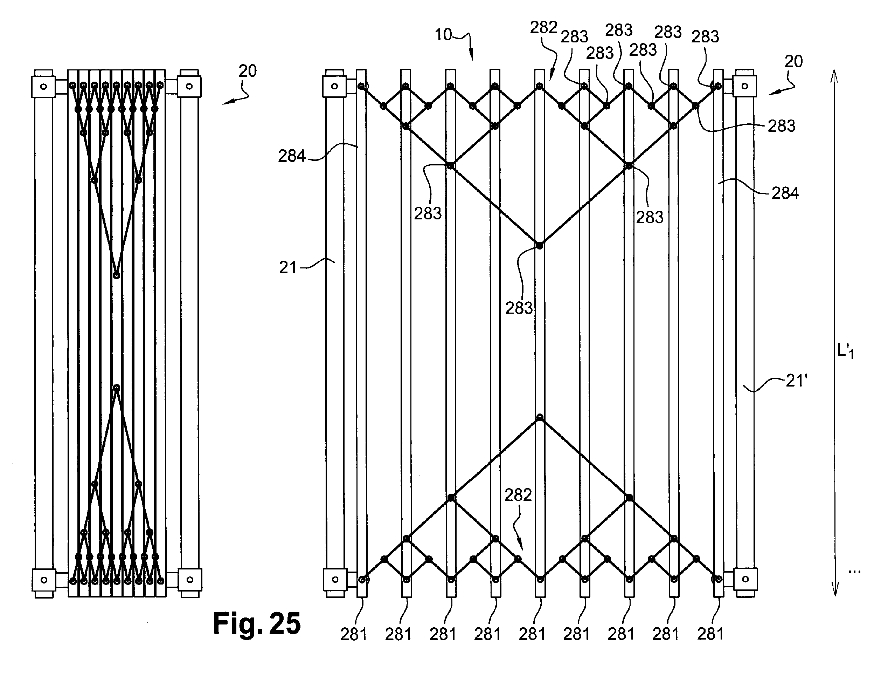

La figure 25 représente un autre mode de réalisation dans lequel la structure de maintien 20 est combinée à une structure maillée 10 comprenant des barres longitudinales 281 parallèles entre elles. Dans ce cas la structure de cadre 20' peut être confondue avec la structure de maintien 20, dans ce cas on considère que les barres longitudinales 21 et 21' sont des éléments de la structure de maintien 20. La bi-structure est représentée dans deux positions de pliage : dépliée et pliée.

Dans cette variante, la structure maillée 10 comprend une longueur L1' invariante dans toutes les positions de pliage et dépliage de la bi-structure.

L'espacement entre les barres longitudinales 281 sur la surface de la bi-structure est variable selon la position de pliage et dépliage.

Dans cet exemple de réalisation, les barres sont reliées à leurs deux extrémités à un dispositif en losanges 282 qui assure l'équidistance entre les barres longitudinales 281 le dispositif en losanges 282 comprend une pluralité de points d'accroche permettant de fixer le dispositif en losanges sur chacune des barres longitudinales. Chaque barre longitudinale 281 comprend en au moins une extrémité au moins un point de contact, cas des barres 284 positionnées à chaque extrémité des deux côtés de la bi-structure, ou au moins deux points de contacts 283pour les autres barres longitudinales comprises entre les deux barres longitudinales extrêmes 284.

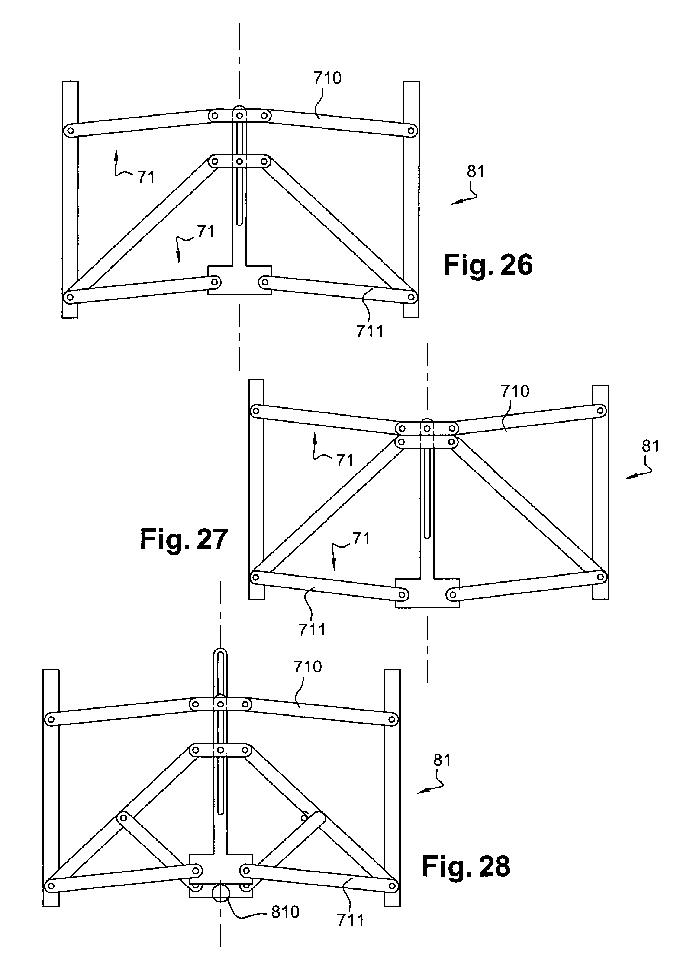

La figure 26 représente un dispositif de rigidification 81, tel que représenté à la figure 19, et destiné à être positionné entre deux bras par exemple d'une poussette ou d'un chariot. Le dispositif de rigidification 81 est représenté à la figure 26 dans une position où il bascule entre une position de pliage à une position de dépliage. La figure 27 représente le dispositif de rigidification 81 dans une position dépliée.

Le dispositif de rigidification 81 rempli également une fonction de verrouillage et déverrouillage de la position des bras arrière.

Selon un autre mode de réalisation, il est possible d'utiliser au moins un compas comme solution de mise en tension de la structure, le compas dépassant légèrement le point d'équilibre pour obtenir un effet genouillère. Il est possible de combiner le au moins un compas à un ressort de rappel pour garantir la mise en oeuvre du dispositif.

En particulier, si la structure maillée 10 comporte au moins un élément extensible ayant une butée physique, cela permet de provoquer une mise en tension de l'élément extensible dans sa largeur en position de dépliage POS2.

Lorsque plusieurs compas 710, 711 sont utilisés dans un dispositif de rigidification 81 tel que représenté, notamment au sein d'un même plan mais également lorsque ils sont disposés dans différents plans et qu'ils sont articulés autour d'un axe rotation, il existe différentes mises en oeuvre possibles.

Les mises en oeuvre possibles sont :
- une manipulation par l'utilisateur du verrouillage et du déverrouillage de chacun des compas ;
- une synchronisation de la majorité des compas du dispositif de rigidification ;
- une synchronisation de l'intégralité des compas.

Différentes options sont également possibles pour synchroniser les différents compas :
- Quand les deux ou plus compas sont dans le même sens et dans le même plan, une barre de liaison permet de les relier, ladite barre de liaison étant de même dimension et correspondant à leur écartement comme c'est le cas des compas doubles par exemple.
- Quand les deux compas sont en sens opposés et dans le même plan, il est proposé une solution à antiparallélogramme pour synchroniser les compas avant et arrière. Une alternative à base de liaisons par câble est aussi possible.
- Quand les compas sont dans deux plans différents, une solution à câble est possible.

La figure 28 représente un mode de réalisation d'un dispositif de rigidification dans lequel un point physique 810 est créée au milieu des points de fixation latéraux du compas 711.

La création de ce point 810 permet de concevoir des solutions pour synchroniser les différents dispositifs dans les différents plans et notamment les compas 710, 711. Il est en particulier devenu possible de créer un point de passage pour un ou plusieurs câbles sous formes d'un anneau 810 ou d'une poulie et de relier les différents dispositifs pliables du dispositif de rigidification, et notamment les compas 710, 711.

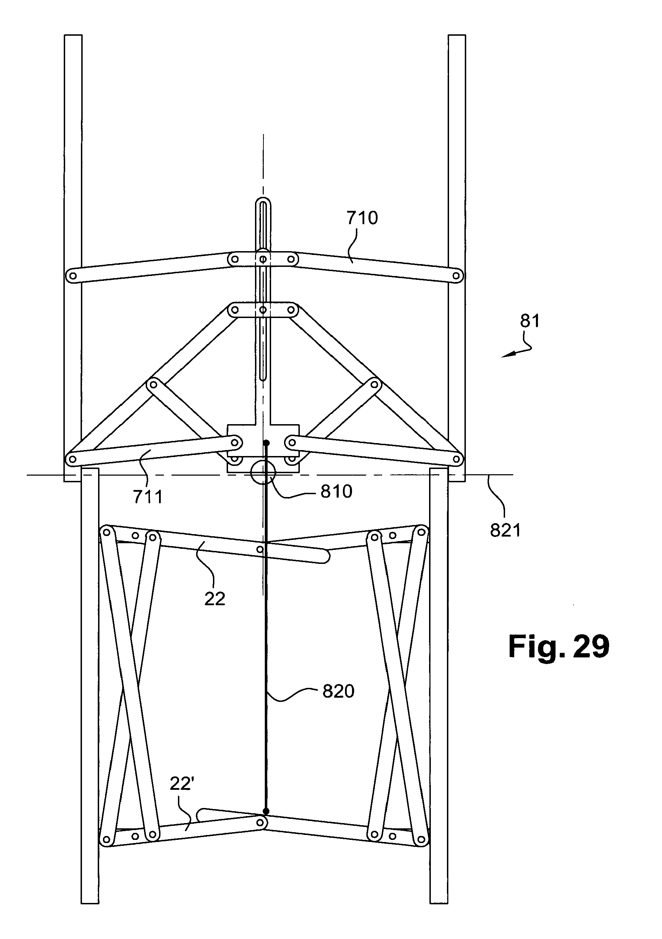

La figure 29 illustre la synchronisation entre le plan vertical du compas 711 et le plan horizontal de la bi-structure. Pour la compréhension les deux plans sont représentés sur la figure ensemble alors qu'ils sont en réalité perpendiculaires au moment du verrouillage/déverrouillage.

Dans cette configuration :
- Il est important que le passage du câble 820 soit le plus proche possible de l'axe de rotation 821.
- Si on utilise une poulie, l'axe de la poulie est quasiment confondu avec l'axe de rotation.
- Le câble 820 est relié d'une part au compas inférieur 711 du dispositif de rigidification 81 et d'autre part au compas 22' avant de la bi-structure.
- Les déplacements doivent être voisins, voire identiques malgré la différence de largeur de la bi-structure et de structure des compas 711.
- Le déverrouillage s'effectue à partir d'un compas vertical 710 ou 711.
- Le verrouillage s'effectue par des ressorts de rappel, au moins pour la bi-structure.

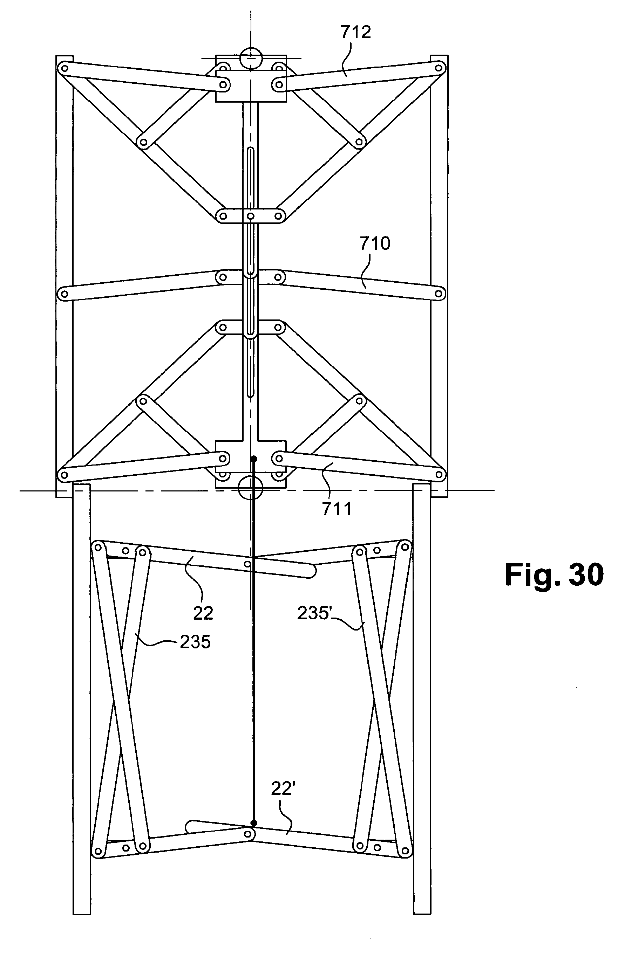

La figure 30 représente un autre mode de réalisation toujours représenté dans selon la même vue que la figure 29 non réaliste.

Dans cet exemple, un troisième compas 713 est agencé en partie supérieure du plan vertical du dispositif de rigidification 80.

Il est également possible de synchroniser les pliages des différents compas par un système de câbles et de poulies, potentiellement avec aller et retour.

Il est possible de laisser indépendant les compas les uns des autres, le compas supérieur 712 étant manipulé à la main par l'utilisateur, le compas inférieur pouvant lui être verrouillé par exemple au pied.

Dans les deux cas, l'ensemble réalise une structure qui peut elle aussi devenir une structure d'appui en renforçant les pivots/articulations pour un maillage sommaire de barres coulissantes espacées d'une dizaine de centimètres potentiellement suffisant.

A noter qu'il est possible d'associer les différentes solutions de structure de maillage proposées en combinaison avec les différentes structures de support décrites, même si les combinaisons évoquées sont celles qui sont optimales en termes d'adéquation de cinématiques.

Dans tous les cas, il faut agencer cette combinaison, en apportant aux points d'appui les interfaces nécessaires, telle que
- une interface à jeu nul, le point d'appui venant naturellement en contact direct avec l'élément de la bi-structure en regard ;
- une Interface à jeu nul, le point d'appui venant en contact avec l'élément de la structure en regard par modification de sa forme et/ou de son galbe ;
- Une Interface physique venant combler l'écart en distance entre le point à renforcer et le point d'appui en regard.

La figure 31 représente différents modes de réalisation d'interface assurant la fonction de point d'appui, également appelés points de support, entre la structure de maintien 20 et la structure maillée 10.

L'interface 91 représente un cylindre de la hauteur adéquate, selon la distance choisie séparant les plans comprenant d'une part la structure maillée 10 et d'autre part la structure de maintien 20, en prenant en considération l'épaisseur des éléments de liaison.

L'interface 91 est positionnée entre le point à renforcer et le point en appui. A titre d'exemple cela peut être le cas du point central qui vient en appui sur une des deux diagonales, en contact en continu pendant la phase de pliage/dépliage.

L'interface 92 comprend un cylindre tel que l'interface 91 et comporte une forme de mamelon dans sa partie inférieure autorisant un certain jeu de fonctionnement pendant la phase de pliage/dépliage mais venant à la bonne hauteur en phase finale de dépliement de la bi-structure.

L'interface 93 est proche de l'interface 92 et comprend une bille porteuse 930 de manutention l'extrémité du mamelon qui a été écrêté.

L'interface 93 permet d'accroitre la robustesse de la bi-structure une fois dépliée en particulier pour supporter des charges assez lourdes.

Une interface de type rampe sur un élément plus long peut également être une bonne alternative.

Ce type d'interfaces est à positionner sur l'élément de structure le plus pertinent : le point à renforcer, le point en appui, voire les deux. Par exemple, les points 35, 35', 33, 221, 245, 246, 110, 120, 283 décrits précédemment sont des points particulièrement intéressants pour établir un contact entre la structure maillée et la structure de maintien par exemple au moyen d'une interface décrite à la figure 31.

De façon pratique, il s'avère sans que cela soit obligatoire que les points pivots sont privilégiés pour positionner ces interfaces. Mais de fait un autre positionnement à quelques centimètres près peut être également efficace en termes de renforcement.

Selon un mode de réalisation, il est possible de rendre la bi-structure contrôlable en ajoutant au moins un actionneur, à titre d'exemples un actionneur linéaire électrique, ou pneumatique, ou oléopneumatique.

Cet actionneur peut être positionné par exemple :
- entre deux extrémités de la bi-structure pour les bi-structures ayant une variation de longueur et de ce fait contrôlant la longueur ;
- entre les milieux de compas fonctionnant en opposition et de ce fait contrôlant la largeur ;
- entre le haut du compas double et le point fixe créé et de ce fait contrôlant la largeur ainsi que le verrouillage/déverrouillage.

Dans ce cadre, il est d'autant plus intéressant d'avoir synchronisé l'ensemble dispositifs et notamment des verrouillages/déverrouillages.

Selon un mode de réalisation, un ressort à gaz à blocage du type de ceux utilisés de réglage en hauteur des sièges de bureau, il est possible d'accéder à des positions intermédiaires correspondant à un réglage en largeur différent et/ou une position intermédiaire de pliage/dépliage de l'ensemble. Cela peut être le cas, par exemple pour une chaise longue.

Selon tous les modes de réalisations, La structure maillée peut être complétée sur sa face externe si besoin par un tissu, une toile potentiellement étanche, un garnissage ou des lames articulées par exemple de type clayettes ou volet roulant.

Ces derniers peuvent être :
- non extensibles et être mises en tension
- extensibles
- ou encore s'enrouler et se dérouler avec une solution de type rideau enrouleur ou volet roulant.

Il également possible de doubler la bi-structure par symétrie obtenant ainsi une structure sandwich avec deux faces externes.

De fait, la solution proposée issue du domaine de la poussette peut être adoptée pour des objets pliables en largeur dans différents domaines autres que la puériculture :
La bi-structure de l'invention peut donc être adaptée à des civières dans le domaine médical.

En outre, la bi-structure peut être appliquée dans le domaine du mobilier pour des applications concernant des sièges, des strapontins, des chaises, des fauteuils, ou encore des chaises longues. Un avantage est le pliage de la bi-structure, ce qui permet des applications de mobiliers transportables notamment utiles pour des applications dans le domaine du mobilier de jardin ou de camping ou dans le domaine du matériel forain de marchand ambulant. A titre d'exemple, on cite un étal pliable en largeur combiné à un lit de camp forain.

Selon une application de la bi-structure de l'invention, un objet de l'invention concerne un chariot pliable, tel qu'un chariot de course pliable, un diable, un chariot de manutention pliable.

Dans le domaine de l'aéronautique, une application concerne les sièges de cabine extensible pliable en largeur par exemple réglable en largeur en fonction de la classe du passager.

La bi-structure peut être utilisée pour former des parois de chariot ou encore des cloisons, des ridelles, ou des supports latéraux de brouette.

Enfin, une bi-structure de l'invention peut être appliquée pour former des tapis de sol ou des tables à pic-nic.

Avantageusement, la bi-structure peut former un support apte à être posé sur le sol. Selon un mode la bi-structure forme un support fixé par les coins de la forme rectangulaire. Selon un autre mode de réalisation, elle peut être posée entre deux barres transversales.

Bi-structure est fixée à l'intérieur d'un carter et qu'elle forme un support extractible de l'intérieur. Le support est plié dans un carter et utilisé déplié sur la partie sortant du carter.

Bi-structure forme le fond ou la paroi d'un contenant. Lorsqu'elle constitue un fond, elles

Bi-structure elle est combinée à un dispositif enrouleur d'un revêtement de la bi-structure. Il peut s'agir d'un support combiné à un dispositif de type rideau enrouleur ou volet roulant.

## Revendications

1. Bi-structure extensible pliable rectangulaire **caractérisée en ce qu'**elle comprend :
• une structure maillée (10) pliable formant un support ;
• une structure de maintien (20) pliable comprise dans un plan parallèle à la structure maillée (10) et maintenant ladite structure maillée (10) dans au moins une position de dépliage (POS2) de la structure maillée (10),
ladite structure maillée (10) étant en appui sur la structure de maintien (20) au moyen d'une pluralité de points de support (33, 34, 221, 245, 246), le pliage de la structure maillée (10) et le pliage de la structure de maintien (20) étant synchronisés et s'inscrivant à l'intérieur de la forme rectangulaire de la bi-structure, ladite structure de maintien comprenant, en outre, une structure de renfort transversale (22) amovible dans sa longueur permettant d'assurer en position de dépliage (POS2) un ensemble de points de supports transversaux (35').

2. Bi-structure selon la revendication 1, **caractérisée en ce que** la structure de renfort transversale (22) comprend au moins un ensemble de barres coulissantes ou une barre télescopique.

3. Bi-structure selon l'une quelconque des revendication 1, **caractérisée en ce que** la structure de renfort transversale (22) comprend au moins un compas pliant (221, 222, 223), le pliage du compas étant synchronisé avec le pliage de la bi-structure.

4. Bi-structure selon la revendication 3, **caractérisée en ce que** le au moins un compas pliant (221, 222, 223) comporte deux bras (222, 223) reliés par une liaison pivot (221), dont un bras (223) est prolongé (223, 224) de part et d'autre de la liaison pivot (221) de sorte à permettre un appui plan entre les deux bras en position de dépliage (POS2).

5. Bi-structure selon l'une quelconque des revendications 3 à 4, **caractérisée en ce que** le au moins un compas pliant (221, 222, 223) comporte un premier bras (223) ayant un profilé en forme de « U » et un second bras (222) ayant un profilé en forme rectangulaire de sorte qu'en position de pliage le profilé en forme rectangulaire est apte à s'insérer dans le profilé en forme de « U ».

6. Bi-structure selon l'une quelconque des revendications précédentes, **caractérisée en ce que** la structure de maintien (20) comprend au moins un dispositif de renfort de support (23) pliable permettant de disposer d'au moins un point de support (245, 246) de la structure maillée (10) à l'intérieur la forme rectangulaire de la bi-structure, le pliage du dispositif de renfort de support (23) étant synchronisé avec le pliage de la bi-structure.

7. Bi-structure selon la revendication 6, **caractérisée en ce que** le dispositif de renfort de support (23) comprend une croix centrale (240) fixée sensiblement aux quatre coins (33, 33') de la structure de maintien (20) permettant de disposer d'un point de support (245) à la structure maillée (10) en son centre (245).

8. Bi-structure selon la revendication 6, **caractérisée en ce que** le dispositif de renfort de support (23) comprend au moins un antiparallélogramme (235), ledit antiparallélogramme (235) étant fixé à la structure de renfort transversale (22) au moyen de quatre liaisons pivots (33, 34, 33', 34') et permettant de disposer d'un point de support (246) supplémentaire à la structure maillée (10).

9. Bi-structure utilisée comme structure portante selon l'une quelconque des revendications 1 à 8, **caractérisée en ce qu'**elle comporte un dispositif vertical (70) comportant des bras.

10. Bi-structure selon la revendication 9, **caractérisée en ce que** le dispositif vertical (70) comporte un dispositif de rigidification (71, 72) permettant une réduction de la largeur séparant les bras lors du pliage de la bi-structure.

11. Bi-structure selon l'une quelconque des revendications 1 à 10, **caractérisée en ce que** l'élément de liaison (30') formant la liaison glissière est réalisé par :
• un profilé coulissant dans au moins une barre ;
• un trou oblong permettant un déplacement longitudinal d'un élément fixé à la structure maillée ;
• un élément amovible en rotation permettant un déplacement longitudinal d'un point de la structure maillée.

12. Bi-structure selon l'une quelconque des revendications 1 à 11, **caractérisée en ce que** la structure de maintien (20) comprend une structure de renfort transversale (22) amovible dans sa longueur permettant d'assurer en position de dépliage (POS2) un ensemble de points de supports transversaux (35').

13. Bi-structure selon la revendication 12, **caractérisée en ce que** la structure de renfort transversale (22) comprend au moins un ensemble de barres coulissantes ou une barre télescopique.

14. Bi-structure selon l'une quelconque des revendications 1 à 13, **caractérisée en ce qu'**elle comporte des roues (80) et des supports de roues (90) reliés au quatre coin de la bi-structure.

15. Bi-structure selon l'une des revendications précédentes pour l'un des objets suivants : poussette pliante, landau pliant, chariot pliant , table pliante, siège pliant, brouette pliante, civière pliante.
